# EUROPÄISCHE PATENTSCHRIFT

(11) **EP 4 187 840 B1**
(45) Veröffentlichungstag und Bekanntmachung des Hinweises auf die Patenterteilung: **07.01.2026**
(21) Anmeldenummer: 21211364.1
(22) Anmeldetag: 30.11.2021
(51) Int. Cl.: H04L 9/08, H04J 14/02, H04B 10/70

(54) **RESSOURCENREDUZIERTE QKD-NUTZUNG IN OPTISCHEM TRANSPORT-NETZWERK**
RESOURCE-REDUCED QKD UTILIZATION IN OPTICAL TRANSPORT NETWORK
UTILISATION DE QKD À RESSOURCES RÉDUITES DANS UN RÉSEAU DE TRANSPORT OPTIQUE

(43) Veröffentlichungstag der Anmeldung: 31.05.2023
(73) Patentinhaber: Deutsche Telekom AG, 53113 Bonn (DE)
(72) Erfinder: BRAUN, Ralf-Peter, 12305 Berlin (DE); GEITZ, Marc, 58089 Hagen (DE)
(74) Vertreter: Maucher Jenkins Patent- und Rechtsanwälte

(56) Entgegenhaltungen:
- WO-A1-2013/164044
- YI ZHAO ET AL: "Design of synchronous "plug & play? QKD-WDM-PON for efficient quantum communications", LASERS AND ELECTRO-OPTICS (CLEO), LASER SCIENCE TO PHOTONIC APPLICATIONS)-CLEO: 2011 - LASER SCIENCE TO PHOTONIC APPLICATIONS- 1-6 MAY 2011, BALTIMORE, MD, USA, IEEE, US, 1 May 2011 (2011-05-01), pages 1 - 2, XP031892096, ISBN: 978-1-4577-1223-4
- BRASSARD G ET AL: "Multi-user quantum key distribution using wavelength division multiplexing", PROCEEDINGS OF SPIE, IEEE, US, vol. 5260, 1 December 2003 (2003-12-01), pages 149 - 153, XP009139223, ISBN: 978-1-62841-730-2
- WOO MIN KI ET AL: "One to Many QKD Network System Using Polarization-Wavelength Division Multiplexing", IEEE ACCESS, IEEE, USA, vol. 8, 21 October 2020 (2020-10-21), pages 194007 - 194014, XP011818097, DOI: 10.1109/ACCESS.2020.3032992
- WANG LIU-JUN ET AL: "Experimental Authentication of Quantum Key Distribution with Post-quantum Cryptography", ARXIV.ORG, CORNELL UNIVERSITY LIBRARY, 201 OLIN LIBRARY CORNELL UNIVERSITY ITHACA, NY 14853, 10 September 2020 (2020-09-10), XP081928175
- YALIN LI QUANTUMCTEK CO LTD CHINA: "Draft D2.4 Technical Report on QKDN Transport Technologies (output of 8th FG- QIT4N meeting);TD-GEN-0493", vol. ties/15, 17 June 2021 (2021-06-17), pages 1 - 49, XP044314807, Retrieved from the Internet <URL:https://www-api.itu.int/ifa/t/2017/sg15/docs/211206/td/ties/gen/T17-SG15-211206-TD-GEN-0493!!ZIP-E.zip T17-SG15-211206-TD-GEN-0493-attachment-QIT4N-O-094.docx> [retrieved on 20210617]

## Beschreibung

Die Erfindung betrifft eine Lösung zur Nutzung des QKD-Prinzips, also der Quantum Key Distribution, für den Austausch quantensicherer kryptographischer Schlüssel in einem optischen Transport-Netzwerk OTN, bei gleichzeitiger Verringerung, respektive Minimierung, der dafür erforderlichen Ressourcen. Sie bezieht sich hierbei auf ein Verfahren zur Erzeugung und Verteilung quantensicherer, das heißt nach dem QKD-Prinzip, erzeugter Schlüssel in einem solchen, bis hin zu vollvermaschten OTN. Gegenstand der Erfindung ist darüber hinaus ein entsprechendes, zur Durchführung dieses Verfahrens ausgebildetes optisches Transport-Netzwerk.

Quantencomputer werden nach Ansicht hierzu aussagefähiger Fachleute bereits innerhalb der nächsten Dekade dazu in der Lage sein, heute noch als sicher angesehene, verbreitet eingesetzte Verschlüsselungsverfahren, welche beispielsweise auf der Primfaktorenzerlegung (RSA oder Diffie-Hellman) oder auf Algorithmen auf der Basis elliptischer Kurven (Elliptic Curve Digital Signature Algorithm, ECDSA) basieren, zu brechen. Andererseits kommt der gesicherten Übertragung von Daten über Kommunikationsnetze, zum Beispiel im Zusammenhang mit der Übertragung von Daten zur Steuerung von Maschinen im Rahmen von Industrie 4.0 oder aber auch im Zusammenhang mit der zunehmenden Nutzung von Smart Home Technologien, eine immer noch ständig steigende Bedeutung zu. Diese Sicherheit wird durch eine Verschlüsselung der Daten, derzeit noch mittels der bereits angesprochenen Verschlüsselungsverfahren, gewährleistet.

Die fortschreitende Entwicklung von Quantencomputern erfordert aber, unter anderem auch unter dem Aspekt der Langlebigkeit vieler Produkte und Industrieerzeugnisse, bereits heute die Entwicklung und den Einsatz neuer Verschlüsselungstechniken und Verfahren. Während die bisher gebräuchlichen Verfahren auf der Annahme beruhen, dass sie auch unter Einsatz einer größeren Zahl parallel arbeitender moderner, aber mittels herkömmlicher Technik, das heißt nicht unter Einsatz der Quantenmechanik realisierter Computer, nicht zu brechen sind, gilt dies für unter Verwendung von Quantencomputern geführte Angriffe zukünftig nicht mehr. Es gilt daher schon jetzt, Verschlüsselungsverfahren zu finden, welche auch einem Angriff mit Quantencomputern widerstehen können. Eine Möglichkeit, diesem Erfordernis zu entsprechen, besteht darin, sich auch zum Zweck der Verschlüsselung quantenmechanischer Verfahren zu bedienen.

Entsprechende, zum vorgenannten Zweck entwickelte Verfahren, welche gleichzeitig die Erzeugung kryptographischer Schlüssel auf quantenmechanischer Basis und deren Verteilung ermöglichen, werden unter dem Begriff QKD-Verfahren (QKD = Quantum Key Distribution) zusammengefasst. Eines dieser Verfahren, welches bereits auch für die Nutzung in der Praxis umgesetzt wird, ist das QKD-Verfahren nach dem BB84-Protokoll. Bei QKD-Verfahren handelt es sich um symmetrische Verschlüsselungsverfahren, welche das bei herkömmlichen Verschlüsselungsverfahren bestehende Problem des geschützten Austauschs des zur symmetrischen Verschlüsselung genutzten Schlüssels durch den Einsatz quantenmechanischer Wirkprinzipien lösen.

Die Reichweite kommerzieller, glasfaserbasierter QKD-Systeme beträgt aktuell zirka 100 km. Grund hierfür ist die in den Glasfasern auftretende Dämpfung der prinzipbedingt mit nur sehr geringer Leistungen übertragenen, optisch vermittelten Quantenzustände. Andererseits ist es aber nicht möglich, dieser Dämpfung bei der Anwendung von QKD-Verfahren durch Einordnung von Signalverstärkern in den Lichtleitfasern zu begegnen. Dies begründet sich dadurch, dass derartige Verstärker die übertragenen Quantenzustände gewissermaßen auslesen und sie dadurch zerstören würden, so dass sie nicht mehr für eine Schlüsselerzeugung nach dem QKD-Prinzip genutzt werden könnten.

Aufgrund der limitierten Reichweite eignen sich QKD-Systeme, welche ohne Verwendung von Repeatern oder Relaisstationen auskommen, insbesondere für die Realisierung sogenannter Metronetze, also zur Errichtung die QKD-Technik nutzender optischer Transport-Netzwerke OTN in Ballungsräumen, wie insbesondere Großstädten oder industriellen Kernregionen. Unabhängig hiervon ist die Errichtung QKD-Verfahren nutzender Infrastrukturen sehr aufwändig und insbesondere kostenintensiv. Daher wird nach Möglichkeiten gesucht, unter Beachtung der für derartige Systeme bestehenden Erfordernisse und Randbedingungen die für ihre Realisierung erforderlichen Ressourcen möglichst gering zu halten.

Neben der Frage der optischen Reichweite, das heißt der möglichen Übertragungslänge beim Einsatz der QKD-Technik in OTN oder auch speziell in PON (Passive Optical Networks), ist die Nutzung der QKD für den verschlüsselten Datenaustausch zwischen mehreren Nutzern respektive Netzwerkknoten eines Netzes Gegenstand näherer Betrachtungen und von Entwicklungen zur verschlüsselten Kommunikation in optischen Netzwerken. So beschreiben beispielsweise Yi Zhao et al. In "Design of Synchronous ,plu & play' QKD-WDM-PON for Efficient Quantum Communications" (Conference on Lasers and Electro-Optics [CLEO'11], Baltimore, Maryland, USA, May 01-06, 2011) ein PON mit einem nach den Prinzipien der QKD erfolgenden Schlüsselaustausch zwischen einer zentralen Instanz respektive einem Optical Line Terminal (OLT) und mindestens zwei Optical Network Units (ONUs). Die bei der QKD genutzten, durch eine Quelle des OLT ausgesendeten Einzelphotonen werden dabei über ein 1 : N AWG an die ONUs übermittelt. Gegenstand näherer Betrachtungen ist dabei ein Netzwerkdesign, bei welchem die optischen Signale mit den Nutzdaten unabhängig von den Einzelphotonen für die QKD über separate Übertragungswege und ein darin angeordnetes gesondertes 1 : N AWG übertragen werden.

Ein im Hinblick auf die Übertragung der Einzelphotonen für die QKD vergleichbares Netzwerkdesign wird von Woo Min Ki et al. in "One to Many QKD Network System USING Polarization-Wavelenght Division Multiplexing" (IEEE Access, USA Bd. 8, 21. Oktober 2020, Seiten 194007 - 194014) beschrieben. Auch hier besteht, wie bereits aus dem Titel der Schrift hervorgeht, eine 1 : N-Beziehung zwischen den Konten des Netzwerkes, welche über ein entsprechendes AWG hergestellt wird. Im Fokus des Artikels steht jedoch der Einsatz des Polarization-Wavelenght Division Multiplexing (PDM).

Aufgabe der Erfindung ist es, eine Lösung bereitzustellen, welche es ermöglicht, quantensichere Schlüssel, unter Nutzung der QKD-Prinzipien, in einem teil- oder vollvermaschten optischen Transport-Netzwerk mit einem möglichst geringen Ressourcenaufwand zur erzeugen und zu verteilen. Hierfür sind ein Verfahren anzugeben und ein zu dessen Durchführung geeignetes OTN bereitzustellen.

Die Aufgabe wird durch ein Verfahren mit den Merkmalen des Patentanspruchs 1 gelöst. Ein die Aufgabe lösendes, zur Durchführung des Verfahrens geeignetes optisches Transport-Netzwerk OTN wird durch den ersten Sachanspruch charakterisiert. Vorteilhafte Aus- und Weiterbildungen der Erfindung sind durch die jeweiligen Unteransprüche gegeben. In diesem Zusammenhang wird darauf hingewiesen, dass die Begriffe Netzwerk und Netz nachfolgend synonym gebraucht werden, ihnen also dieselbe Bedeutung zukommt. Beide bezeichnen im Kontext der Beschreibung der Erfindung ein optisches Transport-Netzwerk OTN.

Eine Möglichkeit für eine Verringerung des Ressourcenaufwandes ist für optische OTN durch die Verwendung eines NxN Arrayed Waveguide Grating AWG gegeben, durch dessen Einsatz sich jeder Netzwerkknoten des OTN mit jedem anderen Netzwerkknoten verbinden kann, sich also eine Vollvermaschung, bei gleichzeitiger Reduzierung der Anzahl der dafür erforderlichen Faserverbindungen realisieren lässt. Ein unter Verwendung eines solchen AWG realisiertes OTN wird beispielsweise in der WO 2013/164044 A1 offenbart. Mittels des AWG, bei welchem es sich um rein passives optisches Element handelt, ist es dabei möglich, die einzelnen Netzwerkknoten des OTN - und zwar jeden Netzwerkknoten mit jeweils allen anderen Netzwerkknoten - durch transparentes optisches Routing TOR jeweils Ende-zu-Ende optisch transparent und passiv miteinander zu verbinden.

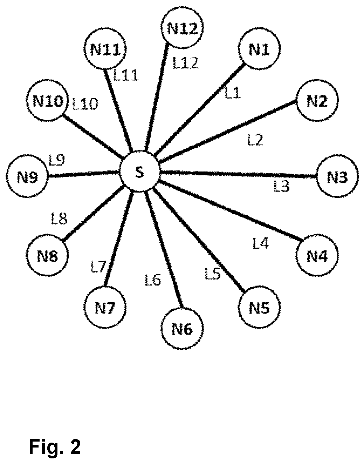

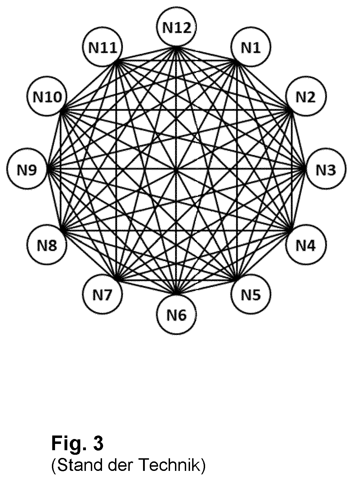

Die Figuren 2 und 3 veranschaulichen die durch den Einsatz des AWG mögliche Reduktion der Anzahl der zur Vollvermaschung in einer solchen TOR-Netzwerk-Topologie, respektive in einem TOR-OTN, notwendigen optischen Fasern (Glasfasern = GF), welches Netzkapazitäten größer als 1 Petabit/s ermöglicht. Aufgrund des optisch rein passiven Aufbaus des TOR-Netzwerks lassen sich quanten-optische Verbindungen zwischen allen Punkten, nämlich zwischen den jeweils mit einem Multiplexer für ausgehende optische Signale sowie mit einem Demultiplexer für eingehende optische Signale ausgestatteten Netzwerkknoten (N1 bis N12 gemäß den Figuren 2 und 3), gleichzeitig etablieren. Die Wellenlängenbelegung einer Glasfaser bei der Nutzung des DWDM-Verfahrens (mit DWDM = Dense Wavelength Division Multiplexing) ist in der Tabelle 1 beispielhaft für ein OTN mit 4 Netzwerkknoten und in der Tabelle 2 für ein OTN mit 6 Netzwerkknoten gezeigt.

**Tabelle 1**

| Von | Nach | Optische Kanalnummer |
|---|---|---|
| N1 | N2 | 2 |
| | N3 | 3 |
| | N4 | 4 |
| N2 | N1 | 2 |
| | N3 | 4 |
| | N4 | 1 |
| N3 | N1 | 3 |
| | N2 | 4 |
| | N4 | 2 |
| N4 | N1 | 4 |
| | N2 | 1 |
| | N3 | 2 |

**Tabelle 2**

| Von | Nach | Optische Kanalnummer |
|---|---|---|
| N1 | N2 | 1 |
| | N3 | 3 |
| | N4 | 6 |
| | N5 | 5 |
| | N6 | 2 |
| N2 | N1 | 1 |
| | N3 | 2 |
| | N4 | 3 |
| | N5 | 6 |
| | N6 | 5 |
| N3 | N1 | 3 |
| | N2 | 2 |
| | N4 | 1 |
| | N5 | 4 |
| | N6 | 6 |
| N4 | N1 | 6 |
| | N2 | 3 |
| | N3 | 1 |
| | N5 | 2 |
| | N6 | 4 |
| N5 | N1 | 5 |
| | N2 | 6 |
| | N3 | 4 |
| | N4 | 2 |
| | N6 | 1 |
| N6 | N1 | 2 |
| | N2 | 5 |
| | N3 | 6 |
| | N4 | 4 |
| | N5 | 1 |

Bei einem in einer Sterntopologie unter Verwendung eines NxN AWG realisierten OTN reduziert sich die Anzahl der erforderlichen Glasfaserverbindungen auf eine der Anzahl der Netzwerkknoten entsprechende Anzahl, wobei die jeweiligen Fasern aber auch bidirektional genutzt werden können. Jedoch setzt eine entsprechende Lösung auch den Einsatz von (N*(N-1)/2) unabhängigen, separaten QKD-Systemen an den Ausgängen der DWDM Multiplexer/Demultiplexer in den Netzwerkknoten voraus. N ist hierbei die Anzahl der zum Netzwerk gehörenden Netzwerkknoten. Für diese Vollvermaschung werden N optische Frequenzen benötigt. In diesem Falle können kontinuierlich und unabhängig voneinander zwischen allen Netzwerkknoten quantensichere Schlüssel ausgetauscht werden. Ein Kontrollsystem wäre für dieses Verfahren nicht notwendig, da die QKD-Systeme autark die notwendige Anzahl an Schlüsseln bereitstellen können. Das NxN AWG des OTN ist hierbei vorzugsweise, wie in Fig 2 gezeigt als Sternpunkt in einem OTN mit Sterntopologie angeordnet. Aber auch die Realisierung einer Ringstruktur kommt grundsätzlich in Betracht.

Der größte Vorteil dieses Aufbaus ist die Ausnutzung der logischen Vollvermaschung aller QKD Endknoten bei Aufbau eines sternförmigen physikalischen Netzwerkes. Durch den Wegfall eines Kontrollsystems ist diese Lösung äußerst robust, weil komplett passiv. Auch sind die QKD-Systeme fix auf eine Wellenlänge einstellbar. Die kryptographischen Schlüssel verbleiben ausschließlich bei den Anwendern, so dass selbst höchste Sicherheitsbedürfnisse der Anwender befriedigt werden.

Der größte Nachteil des Aufbaus ist aber die Anzahl der unabhängigen QKD-Systeme, jeweils eines pro Transponder pro Netzwerkknoten. Somit wächst die Anzahl der notwendigen QKD-Systeme quadratisch mit der Anzahl der Netzwerkknoten, was eine sehr große Investition bedeutet.

Das zur Lösung der Aufgabe vorgeschlagene Verfahren zur Erzeugung und Verteilung quantensicherer Schlüssel in einem mindestens drei Netzwerkknoten umfassenden optischen Transport-Netzwerk OTN, in welchem die optischen Signale über faseroptische Verbindungen übertragen werden, geht daher ebenfalls von der Verwendung eines passiven NxN Arrayed Waveguide Grating (AWG) aus, mittels welchem optische Signale und hierbei auch solche, welche Quantenzustände zur Erzeugung quantensicherer Schlüssel nach einem QKD-Verfahren vermitteln, innerhalb des OTN durch transparentes optisches Routing (TOR) jeweils Ende-zu-Ende optisch passiv und transparent übertragen werden.

An dieser Stelle Folgendes klargestellt. Im Kontext der Erfindung, welche sich auf die Erzeugung und Verteilung quantensicherer Schlüssel in einem optischen Transportnetzwerk OTN unter Nutzung der QKD bezieht, werden dafür von einem Netzwerkknoten zu einem anderen Netzwerkknoten des OTN zu übertragende Quantenzustände in Form diese Quantenzustände vermittelnder Photonen (Quantenzustandsphotonen) übertragen. Soweit also entsprechende Quantenzustandsphotonen durch eine Laserquantenquelle ausgesendet und durch einen dafür ausgebildeten Empfänger empfangen werden, ist dies gleichbedeutend mit der Aussendung und dem Empfang der durch diese Quantenzustandsphotonen jeweils vermittelten, respektive übertragenen Quantenzustände. Es stellt daher keine Differenzierung oder gar einen Widerspruch dar, wenn in den vorstehenden oder in den nachfolgenden Darstellungen von einer Aussendung von Quantenzustandsphotonen, von einer Aussendung von Quantenzuständen oder von einer Aussendung von Quantenzustände vermittelnden Quantenzustandsphotonen gesprochen wird. Entsprechendes gilt in Bezug auf den Empfang von Quantenzustandsphotonen, von Quantenzuständen oder von Quantenzustände vermittelnden Quantenzustandsphotonen

Durch den Einsatz des NxN AWG können alle bidirektionalen virtuellen Wellenlängen Verbindungen zwischen allen Netzwerkknoten des TOR-OTN, bei welchem es sich auch um ein vollvermaschtes Netz handeln kann, als Single-Hop-Verbindungen bereitgestellt werden. Es können aber auch aufgrund einer ganzheitlichen Optimierung verschiedene Verbindungen gegebenenfalls nicht genutzt werden, so dass eine teilvermaschte optimale Netzwerkstruktur bereitgestellt werden kann. Das heißt, es liegt eine virtuelle Topologie für die Verbindungen zwischen den Netzwerkknoten vor, die nach Bedarf Software mäßig definiert und eingestellt werden kann, also eine virtuelle Software Defined Network (SDN) Topologie.

Dabei bestimmt die optische Wellenlänge auf der Eingangsfaser, respektive an einem Eingangsport des NxN AWG, auf welchem Ausgangsport, respektive über welche Ausgangsfaser die optischen Signale transparent und rein passiv durch das NxN AWG geleitet werden. Für N = 12 (12 Netzwerkknoten) ergibt sich so zum Beispiel eine Verbindungsbandbreite von 400 GHz (oder auch von 8 x 50 GHz Wellenlängenkanälen) für jedes einzelne NxN AWG-Band.

Ein entsprechendes TOR-OTN ist dabei auch in der Lage, verschiedene quantenoptische Verbindungen vollkommen unabhängig voneinander zwischen zwei beliebigen Netzwerkknoten beispielsweise eines Metronetzes zu ermöglichen, wobei nur die optische Frequenz der Quantenkanäle vorgegeben wird. Hierbei werden Punkt-zu-Punkt-Verbindungen zwischen den Netzwerkknoten auf unterschiedlichen optischen Wellenlängen in DWDM Bändern realisiert.

Die vorstehend dargestellte Funktion konnte bereits experimentell mit einem kommerziellen QKD-System, welches hinsichtlich der Wellenlänge im Bereich von 1550 nm innerhalb des C-Bands operiert, bestätigt werden. Dieses experimentelle Ergebnis lässt sich mit der Tatsache begründen, dass das TOR Netz ausschließlich optisch passive Elemente verwendet, die die Kohärenz der Quantenzustände nicht zerstören. Bleibt man somit im Bereich der zulässigen optischen Dämpfungswerte für die QKD-Quantenkanäle, auch unter Berücksichtigung der zusätzlichen Dämpfung der NxN AWG-Komponente, so können Distanzen von bis zu ca. 70 km zwischen den Netzwerkknoten etabliert werden. Befindet sich der Sternpunkt innerhalb eines Netzwerkknotens, dann können von diesem Netzwerkknoten aus 2 x ca. 70 km lange Quantenkanal-Strecken mit QKD-Systemen aufgebaut werden, so dass sich damit insgesamt QKD-System-Distanzen von ca. 140 km erreichen lassen.

Der Hauptvorteil des TOR-OTN ist aber die Möglichkeit, mit verringertem Ressourcenaufwand auch ein vollvermaschtes optisches Netzwerk realisieren zu können. In Abhängigkeit von der Wellenlänge des QKD-Lasers, respektive von der verwendeten optischen Frequenz, ist es möglich, von jedem Netzwerkknoten des Netzwerkes jeweils mit jedem anderen Netzwerkknoten eine Verbindung zu etablieren. Die Wahl der optischen Frequenz und damit der optischen Kanäle definiert dabei den jeweiligen Kommunikationspartner, respektive Netzwerkknoten.

In dem in der zuvor erläuterten Weise ausgebildeten TOR-Netzwerk werden durch Netzwerkknoten des OTN jeweils paarweise QKD-Schlüssel (mittels eines QKD-Verfahrens generierte und verteilte quantensichere Schlüssel) als gemeinsame Schlüssel erzeugt und ausgetauscht. Hierbei werden die zur Erzeugung der Quantenschlüssel erforderlichen Quantenzustände über das TOR-OTN mit den darin angeordneten NxN AGW übertragen. Anschließend übernimmt ein Protokoll (beispielsweise BB84, Ekert oder Coherent One Way) die quantensichere Berechnung eines zwischen beiden Orten (Netzwerkknoten) geteilten Schlüssels, der dann für symmetrische verschlüsselte Nachrichten (AES-256) oder als One-Time Pads (OTP) verwendet werden kann. Die letztgenannten Verschlüsselungsverfahren gelten als quantensicher.

Das Verfahren ist hierbei so gestaltet, dass von mindestens einem Netzwerkknoten, welcher hierbei aus kryptographischer Sicht als Bob fungiert, Quantenzustandsphotonen, das heißt Quantenzustände zur QKD-Schlüsselerzeugung vermittelnde Photonen, unterschiedlicher Wellenlängen empfangen werden. Die von diesem mindestens einen Netzwerkknoten empfangenen Quantenzustandsphotonen mit unterschiedlichen Wellenlängen werden von mehreren, hierbei aus kryptographischer Sicht jeweils als Alice fungierenden, Netzwerkknoten generiert und über das NxN AWG an den sie empfangenden Netzwerkknoten ausgesendet.

Zudem werden durch mindestens einen, aus kryptographischer Sicht als Alice fungierenden Netzwerkknoten mittels nur einer Laserquantenquelle Quantenzustandsphotonen, nämlich Quantenzustände zur QKD-Schlüsselerzeugung vermittelnde Photonen, mit wechselnder Wellenlänge generiert. Die entsprechenden Quantenzustandsphotonen werden an mindestens zwei, hierbei aus kryptographischer Sicht jeweils als Bob fungierende und sich hinsichtlich ihrer Empfangswellenlänge für Quantenzustandsphotonen des mindestens einen vorgenannten Netzwerkknotens voneinander unterscheidende Netzwerkknoten übertragen. Die Übertragung erfolgt über jeweils einen, unter Einbeziehung des bereits genannten NxN AWG zu jedem dieser mindestens zwei zweiten Netzwerkknoten ausgebildeten Quantenkanal.

Das Verfahren kann vorteilhaft umgesetzt werden, indem ein Empfänger mindestens eines als Bob fungierenden Netzwerkknotens innerhalb des für die Übertragung von Quantenzustandsphotonen in dem OTN verwendeten Wellenlängenbereichs hinsichtlich seiner Empfangswellenlänge für Quantenzustandsphotonen entsprechend abgestimmt wird.

Entsprechend kann die Laserquantenquelle mindestens eines als Alice fungierenden, Quantenzustände zur QKD-Schlüsselerzeugung an mehrere andere Netzwerkknoten aussendenden Netzwerkknotens vorzugsweise innerhalb eines ihr möglichen Wellenlängenbereichs wechselnd auf unterschiedliche Wellenlängen abgestimmt oder fortwährend hinsichtlich der Wellenlänge der von ihr generierten Quantenzustände durchgestimmt werden. Hierbei sendet ein als Alice fungierender Netzwerkknoten bei jedem Durchlauf des von seiner Laserquantenquelle abgedeckten Wellenlängenbereichs, welcher vorzugsweise, aber nicht zwingend, innerhalb des optischen C-Bandes liegt, jeweils einmal Quantenzustände mit der Empfangswellenlänge für Quantenzustandsphotonen jedes der mit diesem Netzwerkknoten bei der QKD-Schlüsselerzeugung als Bob zusammenwirkenden zweiten Netzwerkknoten aus.

Der Vorteil eines in der optischen Frequenz abstimmbaren Quantenkanals des QKD-Systems liegt darin, dass dadurch die notwendige Anzahl der QKD-Systeme und Elemente in den Netzwerkknoten erheblich reduziert werden kann, wodurch beispielsweise erheblich kostengünstigere die QKD-Technik nutzende Metronetze aufgebaut werden können.

Ein QKD-System besteht hierbei aus dem Sendeknoten Alice und dem Empfangsknoten Bob, zwischen denen ein Quantenkanal und mindestens ein konventioneller Servicekanal bereitgestellt werden muss. Der Servicekanal ist hierbei auf eine vom zugehörigen Quantenkanal verschiedene Wellenlänge, vorzugsweise desselben Bandes, abgestimmt. Die Glasfasern, welche die Netzwerkknoten über das NxN AWG physisch miteinander verbinden, können so jeweils in Co-Propagation vom Quantenkanal und vom zugeordneten Servicekanal genutzt werden. Auch, wenn in den Patentansprüchen aus Gründen der sprachlichen Vereinfachung nicht ausdrücklich angesprochen, muss im Rahmen der Anwendung eines QKD-Verfahrens zu jedem Quantenkanal ein korrespondierender klassischer Serve-/Protokollkanal ausgebildet werden.

Bisher bestehende QKD-Systeme erlauben die Verwendung mehrerer unterschiedlicher Wellenlängen zur Vermittlung von Quantenzuständen, insbesondere den Einsatz eines ab- oder durchstimmbaren Lasers standardmäßig nicht. Vielmehr nutzen solche Systeme regelmäßig Schmalband-Wellenlängenfilter, um optische Störungen zu verhindern und um Angriffsszenarien auszuschalten. Ferner sind die Interferometer, die in diesen Systemen verbaut sind, auf die verwendete Wellenlänge eingestellt. Grundsätzlich sollte aber, wie hier vorgeschlagen, die Verwendung unterschiedlicher Wellenlängen für einen in einem als Alice fungierenden Netzwerkknoten angeordneten Laser im Zusammenwirken mit mehreren unterschiedlichen, jeweils als Bob fungierenden Netzwerkknoten technisch realisierbar sein.

Im Weiteren kann das vorgeschlagene Verfahren in Abhängigkeit von der jeweiligen Beschaffenheit, respektive Konfiguration des OTN, unterschiedlich ausgestaltet sein. So ist es zum Beispiel denkbar, dass nur einer der Netzwerkknoten Quantenzustandsphotonen mit von mindestens zwei diese mit voneinander verschiedenen Wellenlängen aussendenden Netzwerkknoten empfängt oder nur einer der Netzwerkknoten Laserquantenzustände zur QKD-Schlüsselerzeugung an mindestens zwei, gegebenenfalls aber auch mehr andere, als Bob fungierende Netzwerkknoten aussendet und das Netzwerk darüber hinaus eine größere Zahl von Netzwerkknoten umfasst, welche selbst nicht zur Erzeugung von QKD-Schlüsseln ausgebildet sind. Vorzugsweise sollen aber auch diesen selbst nicht zur Schlüsselerzeugung nach einem QKD-Verfahren ausgebildeten Netzwercknoten quantensichere Schlüssel zur Verschlüsselung mit anderen Netzwerkknoten ausgetauschter Daten zur Verfügung gestellt werden.

Auch ist es denkbar, dass zum Beispiel zwei Netzwerkknoten zwar jeweils zur Erzeugung von QKD-Schlüsseln im Zusammenwirken mit anderen Netzwerkknoten ausgebildet, aber untereinander nicht direkt über einen Quantenkanal miteinander verbunden sind. Das heißt, zwei solche Netzwerkknoten können trotz ihrer Eignung zur QKD-Schlüsselerzeugung miteinander gemeinsam keine QKD-Schlüssel erzeugen, also bei der QKD-Schlüsselerzeugung nicht direkt miteinander zusammenwirken und QKD-Schlüssel untereinander austauschen. Dem Rechnung tragend, ist das Verfahren so ausgestaltet, dass QKD-Schlüssel an Netzwerkknoten, welche untereinander nicht direkt über einen Quantenkanal zur QKD-Schlüsselerzeugung verbunden sind und daher jeweils durch eine Bitsequenz repräsentierte, nach einem QKD-Verfahren erzeugte quantensichere Schlüssel (QKD-Schlüssel) bei anderen über solche Schlüssel verfügenden Netzwerkknoten anfordern, durch diese anderen Netzwerkknoten über klassische Kanäle mit von den sie anfordernden Netzwerkknoten gemeinsam zu nutzenden QKD-Schlüsseln versorgt werden.

Die betreffenden QKD-Schlüssel werden dabei vor ihrer Übertragung und damit vor ihrer Auslieferung an die sie anfordernden Netzwerkknoten mittels einer auf diese Schlüssel angewendeten Key Derivation Function, nämlich mittels einer Schlüsselauslieferungsfunktion, nach einer in allen beteiligten Netzwerkknoten hinterlegten Prozessierungsvorschrift unter Verwendung mindestens eines anderen Schlüssels verschlüsselt oder in einer bei dem jeweils für ihren Empfang bestimmten Netzwerkknoten eineindeutig umkehrbaren Weise in eine andere Bitsequenz überführt. Gemäß einer solchen Key Derivation Function werden die durch andere QKD-fähige Netzwerkknoten bereitgestellten QKD-Schlüssel zur Übertragung bitweise beispielsweise mit anderen QKD-Schlüsseln XOR-verknüpft übertragen.

In diesem Zusammenhang sei, auch wenn in den Patentansprüchen nicht explizit erwähnt, ausdrücklich darauf hingewiesen dass die solchermaßen bereitgestellten, respektive verteilten QKD-Schlüssel, genauer gesagt, die sie beinhaltenden, durch entsprechende Prozessierungsvorgänge entstandenen Bitsequenzen, stets zusammen mit die transportierten Schlüssel jeweils eindeutig bezeichnenden Identifikatoren (ID, respektive Identifier) übertragen werden, mittels welcher der jeweils zur Verschlüsselung von zwischen zwei Netzwerkknoten ausgetauschten Daten zu verwendende gemeinsame QKD-Schlüssel aus einem jeweiligen Schlüsselspeicher der Netzwerkknoten herausgesucht werden kann. Entsprechendes gilt auch für QKD-Schlüssel, welche durch QKD-fähige, direkt über einen Quantenkanal miteinander verbundene Netzwerkknoten zur späteren gemeinsamen Verwendung erzeugt und ausgetauscht werden. Der entsprechende Austausch zugehöriger, einen jeweiligen QKD-Schlüssel bezeichnende Identifikatoren ist demnach in den Patentansprüche stets mitzulesen.

Das Verfahren kann ferner dadurch weitergebildet sein, dass alle Netzwerkknoten des OTN kontinuierlich ihren jeweiligen Schlüsselbedarf an ein dafür in dem OTN vorgesehenes übergeordnetes Kontrollsystem (Key Management System) melden. Hierbei wird dann durch einen Scheduler dieses Kontrollsystems gesteuert, welche der über Quantenkanäle (und natürlich über zugehörige klassische Servicekanäle) miteinander verbundenen Netzwerkknoten zu jeweils welchen Zeitpunkten gemeinsam quantensichere Schlüssel nach einem QKD-Verfahren generieren und miteinander austauschen.

Anders als bei der weiter oben angesprochenen Möglichkeit, wonach der optische Sender als Alice fungierender Netzwerkknoten und/oder der optische Empfänger als Bob fungierender Netzwerkknoten jeweils innerhalb des ihm möglichen Wellenlängenbereiches (fortwährend) durchgestimmt wird, ist hierbei sichergestellt, dass nicht unnötigerweise Quantenzustandsphotonen zur Schlüsselerzeugung ausgesendet werden. Vielmehr kann es bei dem mittels eines Kontrollsystems (auch als Key Management System bezeichnet) bedarfsgesteuerten Austausch quantensicherer Schlüssel nicht geschehen, dass Quantenzustandsphotonen mit einer bei dem sie aussendenden Sender (Alice) im Zuge seines Durchstimmens augenblicklich eingestellten Wellenlänge eventuell verworfen werden müssen, weil der mit der betreffenden Wellenlänge assoziierte, also für ihren Empfang bestimmte Bob gerade keine quantensicheren Schlüssel benötigt oder speichern kann.

Demgemäß werden bei einer sich zur bedarfsgerechten Schlüsselerzeugung eines Kontrollsystems mit einem Scheduler bedienenden Implementierung des Verfahrens wertvolle Ressourcen geschont. Durch das Key Management System (Kontrollsystem) kann dabei außerdem gesteuert werden, zu welchen Zeitpunkten sowie auf welchen Wegen gegebenenfalls im Netzwerk vorhandene Netzwerkknoten, die nicht über Mittel zur QKD-Schlüsselerzeugung verfügen oder Netzwerkknoten, welche untereinander nicht über einen Quantenkanal verbunden sind, aber gemeinsame Schlüssel zur symmetrischen Verschlüsselung des zwischen ihnen erfolgenden Datenverkehrs benötigen, mit quantensicheren Schlüsseln, respektive mit QKD-Schlüsseln, unter Einbeziehung anderer Netzwerkknoten des OTN versorgt werden.

Bei einer entsprechenden Ausgestaltung eines solchen, ein Kontrollsystem umfassenden OTN kann es aber auch vorgesehen sein, dass jeder Netzwerkknoten des OTN mit jeweils allen anderen Netzwerkknoten des OTN gemeinsam QKD-Schlüssel unter Verwendung jeweils unterschiedlicher Wellenlängen für die Quantenzustände erzeugt und austauscht, wobei jeder Netzwerkknoten sowohl als Alice als auch als Bob fungiert. Hierbei ist dann vorzugsweise jeder Netzwerkknoten mit einer Laserquantenquelle ausgestattet, welche Quantenzustandsphotonen mit unterschiedlichen Wellenlängen generieren kann, wobei die Anzahl der der Laserquantenquelle für Quantenzustandsphotonen möglichen Wellenlängen der Anzahl der anderen Netzwerkknoten in dem Netzwerk entspricht, respektive in einem Netzwerk mit N Netzwerkknoten N - 1 beträgt.

In ihrer Funktion als Bob, welcher mit mehreren, jeweils als Alice fungierenden Netzwerkknoten bei der QKD-Schlüsselerzeugung zusammenwirkt, empfangen die als Bob agierenden Netzwerkknoten die Quantenzustände von den einzelnen der mit ihnen als Alice zusammenwirkenden Netzwerkknoten, wie bereits ausgeführt, mit unterschiedlichen Wellenlängen. Durch das NxN AWG werden dabei die bei diesem von den unterschiedlichen, als Alice arbeitenden Netzwerkknoten eingehenden, Quantenzustände vermittelnden Wellenlängen ausgangsseitig in ein vollständig permutiertes optisches Frequenzshuffle überführt. Durch das NxN AWG wird hierbei festgelegt, welche Quantenzustandsphotonen mit welcher Wellenlänge jeweils welchem der als Bob fungierenden Netzwerkknoten zugeleitet werden. Oder anders ausgedrückt, in seiner Funktion als Bob empfängt ein Netzwerkknoten Quantenzustände von jedem der verschiedenen, jeweils zusammen mit ihm ein QKD-System ausbildenden Netzwerkknoten mit einer anderen Wellenlänge als von den jeweils anderen, ihm gegenüber ebenfalls als Alice fungierenden Netzwerkknoten. Der betreffende Netzwerkknoten sendet darüber hinaus, sofern er außerdem dazu ausgebildet ist, im Rahmen mehrerer anderer QKD-Systeme selbst als Alice zu fungieren, in dieser Eigenschaft an die anderen Netzwerkknoten dieser QKD-Systeme Quantenzustandsphotonen mit unterschiedlichen Wellenlängen aus.

Zur weiteren Erhöhung der Sicherheit kann das vorgeschlagene Verfahren dadurch weitergebildet sein, dass sich die gemeinsam quantensichere Schlüssel nach einem QKD-Verfahren erzeugenden Netzwerkknoten sowie von derartigen Netzwerkknoten quantensichere Schlüssel empfangende, mit ihnen direkt nicht über einen Quantenkanal verbundene Netzwerkknoten untereinander mittels PQ-Zertifikaten, also mittels unter Anwendung von Verfahren der Post Quantum Cryptography erzeugten Zertifikaten, authentifizieren.

In entsprechender Ausgestaltung des Verfahrens kann es darüber hinaus noch vorgesehen sein, dass die zur Übertragung der Quantenzustände genutzten, über das NxN AWG geführten faseroptischen Verbindungen in Zeiträumen, in denen diese nicht für einen QKD-Schlüsselaustausch benötigt werden, als klassischer Kanal zur Übertragung von Daten verwendet werden.

Ein die Aufgabe lösendes, zur Durchführung des vorbeschriebenen Verfahrens ausgebildetes optisches Transport-Netzwerk OTN mit mindestens drei Netzwercknoten, in welchem optische Signale zwischen den Netzwerkknoten über faseroptische Verbindungen übertragen werden, weist ein passives NxN Arrayed Waveguide Grating (AWG) auf und ist als transparentes optisches Routing Netzwerk, das heißt als TOR-OTN, ausgebildet. Optische Signale werden in diesem TOR-OTN über das passive NxN AWG durch transparentes optisches Routing jeweils Ende-zu-Ende optisch transparent und passiv übertragen. In diesem Netzwerk werden durch über einen Quantenkanal und einen klassischen Protokollkanal (synonym auch Servicekanal) miteinander verbundene Netzwerkknoten jeweils paarweise QKD-Schlüssel als gemeinsame quantensichere Schlüssel nach einem Verfahren der Quantum Key Distribution erzeugt und ausgetauscht.

Mindestens ein bei der QKD-Schlüsselerzeugung aus kryptographischer Sicht als Bob fungierender, das heißt Quantenzustände empfangender Netzwerkknoten weist einen hinsichtlich seiner Empfangswellenlänge abstimmbaren Empfänger auf. Der solchermaßen ausgestattete Netzwerkknoten empfängt mithilfe seines abstimmbaren Empfängers wechselnd Quantenzustandsphotonen mindestens zweier unterschiedlicher Wellenlängen. Dieser mindestens eine Quantenzustandsphotonen unterschiedlicher Wellenlängen empfangende Netzwerkknoten ist zur QKD-Schlüsselerzeugung mit mindestens zwei, dabei aus kryptographischer Sicht jeweils als Alice fungierenden, Quantenzustandsphotonen unterschiedlicher Wellenlängen aussendenden Netzwerkknoten über jeweils einen Quantenkanal verbunden. Die einzelnen Quantenkanäle werden jeweils unter Einbeziehung des NxN AWG ausgebildet. Die jeweiligen Servicekanäle werden in konventioneller Weise nach dem Prinzip der DWDM (Dense Wavelength Division Multiplexing) auf Wellenlänge innerhalb desselben optischen Bandes abgestimmt wie ihr jeweils zugehöriger Quantenkanal.

Ferner ist mindestens ein bei der QKD-Schlüsselerzeugung aus kryptographischer Sicht als Alice fungierender, das heißt Quantenzustände aussendender erster Netzwerkknoten mit einer Laserquantenquelle ausgestattet, welche Quantenzustandsphotonen, nämlich Quantenzustände zur QKD-Schlüsselerzeugung vermittelnde Photonen, wechselnd mit mindestens zwei unterschiedlichen Wellenlängen emittiert. Dieser mindestens eine als Alice fungierende Netzwerkknoten ist mit mindestens zwei, dabei aus kryptographischer Sicht jeweils als Bob fungierenden, sich hinsichtlich ihrer Empfangswellenlängen für Quantenzustandsphotonen dieses ersten Netzwerkknotens voneinander unterscheidenden zweiten Netzwerkknoten über jeweils einen, unter Einbeziehung des NxN AWG zu jedem dieser zweiten Netzwerkknoten ausgebildeten Quantenkanal verbunden.

Vorsorglich sei an dieser Stelle darauf hingewiesen, dass es selbstverständlich (insbesondere im Zusammenhang mit einer Umrüstung bereits bestehender Netzwerke) auch möglich ist, in einem NxN AWG aufweisenden TOR-OTN nur einzelne seiner Netzwerkknoten mit einer wechselnd auf unterschiedliche Wellenlängen einstellbaren Laserquantenquelle und/oder mit einem hinsichtlich seiner Empfangswellenlänge abstimmbaren Empfänger für Quantenzustandsphotonen auszustatten. Sofern aber jeder Netzwerkknoten eines solchen OTN mit jedem anderen Netzwerkknoten dieses Netzwerks auch quantensichere Schlüssel nach einem QKD-Verfahren erzeugen kann, umfasst das OTN dann aber gleichzeitig auch Netzwerkknoten, welche mit mehreren (hinsichtlich ihrer Wellenlänge fest eingestellten) Laserquantenquellen und mehreren nicht abstimmbaren Empfänger für Quantenzustandsphotonen ausgestattet sind.

Wie bereits ausgeführt, verfügt das OTN über mehrere als Alice fungierende, das heißt Quantenzustände zur QKD-Schlüsselerzeugung aussendende Netzwercknoten, und über mehrere als Bob fungierende, das heißt Quantenzustände zur QKD-Schlüsselerzeugung empfangende Netzwerkknoten verfügen. Das OTN kann außerdem über ein Kontrollsystem (Key Management System) mit einem Scheduler verfügen, welcher dazu ausgebildet ist, entsprechend einem von Netzwerkknoten des OTN kontinuierlich an das Kontrollsystem gemeldeten Schlüsselbedarf zu steuern, welche der über die Quantenkanäle und zugehörige Servicekanäle miteinander verbundenen Netzwerkknoten zu welchen Zeitpunkten im Zusammenwirken gemeinsam quantensichere Schlüssel nach einem QKD-Verfahren generieren und miteinander austauschen.

Dabei kann ein entsprechendes OTN als ein vollvermaschtes Netzwerk ausgebildet sein, in welchem alle Netzwerkknoten zum Zweck der Erzeugung quantensicherer Schlüssel und des Schlüsselaustausches innerhalb der jeweiligen, dazu zwischen ihnen aufgebauten Verkehrsbeziehungen sowohl als Alice als auch als Bob fungieren können. Eine Vollvermaschung des OTN hinsichtlich des Austausches der Erzeugung quantensicherer Schlüssel dienender Quantenzustandsphotonen kann jedoch, bei gleichzeitig weiterer Reduzierung benötigter Ressourcen, auch dann erreicht werden, wenn in einem eine Anzahl von N Netzwerkknoten umfassenden Netzwerk nicht alle Netzwerkknoten, aber zumindest N-2 der N Netzwerkknoten des OTN dazu ausgebildet sind, sowohl als Alice als auch als Bob fungieren zu können. Näheres dazu soll späterer im Zusammenhang mit den Erläuterungen zu den Zeichnungen unter Bezug auf die Tabelle 3 ausgeführt werden.

Die Quantenzustände mit unterschiedlichen Wellenlängen emittierende Laserquantenquelle des mindestens einen als Alice fungierenden Netzwerkknotens ist vorzugsweise so ausgebildet, dass sie innerhalb eines ihr möglichen Wellenlängenbereichs abstimmbar oder fortwährend durchstimmbar ist. Entsprechend können Netzwerkknoten, welche mit mehreren als Alice fungierenden Netzwerkknoten als Bob zusammenwirken, anstelle mehrerer auf unterschiedliche Wellenlängen zugeschnittener Empfänger jeweils einen, innerhalb eines festgelegten Wellenlängenbereichs, wie beispielsweise des optischen C-Bandes (Wellenlängenbereich zwischen 1.530 nm und 1.565 nm mit 25 nm Bandbreite), abstimmbaren Empfänger aufweisen.

Nachfolgend soll anhand von Zeichnungen nochmals die sich durch den Einsatz der Erfindung ergebende Reduktion von Ressourcen in einem die QKD-Technik nutzenden optischen Netzwerk OTN verdeutlicht werden. Die Zeichnungen zeigen im Einzelnen:
- Fig. 1:: einen Ausschnitt eines TOR-OTN mit einem NxN AWG,
- Fig. 2:: ein grobes Schema der Netztopologie eines vollvermaschten TOR-OTN mit einem NxN AWG im Sternpunkt,
- Fig. 3:: ein grobes Schema eines vollvermaschten OTN in konventioneller Ausführung.

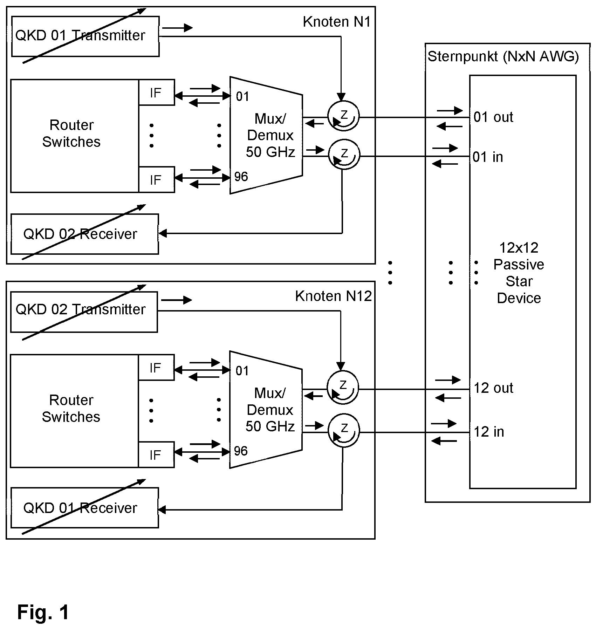

Bevor auf die Figuren 1 und 2 eingegangen wird, sollen an dieser Stelle zunächst einige Ausführungen zu einem OTN mit konventioneller Topologie gemäß dem durch die Fig. 3 dargestellten Stand der Technik erfolgen. Die Fig. 3 zeigt ein vollvermaschtes OTN herkömmlicher Prägung mit 12 Netzwerkknoten N₁ ... N₁₂. Vollvermaschung heißt, dass jeder Netzwerkknoten N₁ ... N₁₂ des OTN zu jedem anderen Netzwerkknoten N₁ ... N₁₂ des OTN eine direkte Verbindung, nämlich eine für die bidirektionale Datenübertragung genutzte Duplex-Glasfaser-Verbindung, aufweist. Bei dem dargestellten konventionell ausgeführten Netzwerk mit 12 Netzwerkknoten N₁ ... N₁₂ bedingt dies demnach Nx(N-1)/2, das heißt 12x(12-1)/2, also 66 Duplex-Direktverbindungen, zwischen den Netzwercknoten N₁ ... N₁₂.

Sofern nun jeder der 12 Netzwerkknoten N₁ ... N₁₂ mit jedem anderen Netzwercknoten N₁ ... N₁₂ des OTN gemeinsam quantensichere Schlüssel nach dem QKD-Prinzip erzeugen und austauschen können soll, wird außerdem eine entsprechende Anzahl optischer Systeme zum Austausch dafür erforderlicher Quantenzustände benötigt. Das heißt in dem Netzwerk werden insgesamt 66 auf die Netzwerkknoten N₁ ... N₁₂ aufgeteilte, diese Quantenzustände austauschende optische Systeme benötigt. Jedes dieser 66 Systeme zum Austausch entsprechender Quantenzustände besteht aus einer in einem der Netzwerkknoten N₁ ... N₁₂ angeordneten Laserphotonenquelle als Sender (Alice) und einem in einem mit diesem Sender über eine Simplex-Glasfaser für den Quantenkanal verbundenen, in einem anderen der Netzwerkknoten N₁ ... N₁₂ angeordneten zugehörigen Empfänger (Bob) für mittels der Laserphotonen (Quantenzustandsphotonen) ausgesendete Quantenzustände.

Die Fig. 2 verdeutlicht demgegenüber die sich bei der Realisierung eines ebenfalls über 12 Netzwerkknoten N₁ ... N₁₂ verfügenden TOR-OTN durch den Einsatz eines NxN AWG ergebende Reduzierung der Ressourcen. Die Reduzierung der Ressourcen zeigt sich hierbei in einer deutlichen Verringerung der Duplex-Glasfaser-Verbindungen L₁ ... L₁₂ für zwischen den Netzwerkknoten N₁ ... N₁₂ zu übertragende Nutzdaten. Wie ersichtlich, werden hierbei lediglich noch 12 solcher, von einem jeweiligen Netzwerkknoten N₁ ... N₁₂ jeweils auf das NxN AWG geführte Verbindungen L₁ ... L₁₂ benötigt. Über das rein passive NxN AWG ist dabei dennoch eine Vollvermaschung gegeben. Es ist also jeder Netzwerkknoten N₁ ... N₁₂ optisch passiv mit jedem anderen Netzwerkknoten N₁ ... N₁₂ des TOR-OTN verbunden.

Dies wird durch das im Sternpunkt angeordnete NxN AWG ermöglicht, welches ein bei ihm von einem der Netzwerkknoten N₁ ... N₁₂ eingehendes optisches Trägersignal in Abhängigkeit von dessen Wellenlängen, das heißt wellenlängenselektiv, jeweils an einen ganz bestimmten der anderen Netzwerkknoten N₁ ... N₁₂ weiterleitet. Das Vorgenannte gilt in gleicher Weise für von den jeweils anderen Netzwerkknoten N₁ ... N₁₂ bei dem NxN AWG eingehenden optische Trägersignale. Das NxN AWG stellt demnach an seinen Ausgangsports ein vollständig permutiertes optisches Frequenzshuffle aller optischen, eingangsseitig bei ihm unter Nutzung unterschiedlicher Frequenzbänder eingehenden Signale her.

Zwar resultiert aus der Verringerung der Anzahl der in dem OTN erforderlichen Faserverbindungen L₁ ... L₁₂ für die Nutzdatenübertragung eine Reduktion der Ressourcen. Sofern allerdings das in der Fig. 2 gezeigte OTN, beispielsweise als hochgesichertes Metronetzwerk, dazu ausgelegt sein soll, dass alle Netzwercknoten N₁ ... N₁₂ dieses TOR-OTN untereinander eine QKD-Beziehung eingehen können, werden dazu aber weiterhin 66 QKD-fähige Einheiten/Systeme (QKD-Systeme) mit jeweils einer Laserquantenquelle und jeweils einem Empfänger benötigt. Die über das NxN AWG geführten faseroptischen Verbindungen L₁ ... L₁₂ werden dabei jeweils als Simplex-Glasfaser zur Realisierung des Quantenkanals zwischen der Laserquantenquelle und dem Empfänger eines solchen QKD-Systems genutzt.

Die Fig. 1 verdeutlicht nun, wie unter Einsatz der Erfindung eine weitere Reduktion der Ressourcen insbesondere im Hinblick auf die sehr kostenträchtigen QKD-Systeme ermöglicht wird. Die Fig. 1 zeigt einen Ausschnitt eines TOR-OTN, dessen grundsätzliche Topologie der in der Fig. 2 gezeigten entspricht. Das heißt, auch hier ist jeder Netzwerkknoten - von angenommen wiederum 12 Netzwercknoten - mit 11 anderen Netzwerkknoten N₁ ... N₁₂ über ein im Sternpunkt angeordnetes NxN AWG verbunden. Ausdrücklich sei an dieser Stelle vorsorglich nochmals darauf hingewiesen, dass das TOR-OTN nicht zwingend eine Sterntopologie aufweisen muss.

Die mit der Erfindung mögliche weitere Reduktion der Ressourcen ergibt sich dadurch, dass die einzelnen Netzwerkknoten N₁ ... N₁₂ nunmehr lediglich noch ein QKD-System mit einem abstimmbaren Transmitter und einem abstimmbaren Receiver aufweisen. Dies wird durch den schräg durch das jeweilige schematische Element für den Transmitter einerseits und für den Receiver andererseits verlaufenden Pfeil symbolisiert. Dieser steht im Hinblick auf den Transmitter konkret für eine abstimmbare Laserquantenquelle und für den Receiver für einen hinsichtlich der Empfangswellenlänge für eingehende Quantenzustandsphotonen abstimmbaren Empfänger. Die von den optischen Komponenten eines jeweiligen QKD-Systems ausgesendeten, respektive empfangenen Quantenzustandsphotonen werden in die jeweilige mit dem NxN AGW verbundene Faser über einen passiven Zirkulator Z eingekoppelt, respektive aus dieser ausgekoppelt.

Eine Besonderheit und nicht offensichtlich ist es, dass die Quantenzustandsphotonen in den Quantenkanälen, abweichend von den konventionell verlaufenden Übertragungsrichtungen der Nutzkanäle, durch die Zirkulatoren Z in der Gegenrichtung durch das NxN AWG und das Glasfaser-Übertragungssystem übertragen werden. Das ist nur möglich, weil das NxN AWG rein passiv ist und demzufolge keinen Unterschied zwischen den Hin- und Rückwegen bei der wellenlängenspezifischen TOR-Funktionalität macht. Dadurch kann auch die Sicherheit des Gesamtsystems erhöht werden, da die im Quantenkanal übertragenen Leistungen sehr gering sind und weit unterhalb der Detektionsschwelle mit normaler optischer Leistung übertragener Nutz- oder Steuerdaten liegen. Das heißt, ein potenzieller Angreifer, Eve, muss die Wellenlänge des genutzten Quantenkanals aus einer Vielzahl von Möglichkeiten, nämlich beispielsweise aus 96 Kanälen mit 50 GHz Bandbreite, erraten. Die Wellenlänge der Quantenkanäle wird dabei zeitlich auch durch das Kontrollsystem (Key Management System) zwischen den verschiedenen Netzwerkknoten N₁ ... N₁₂ gesteuert. Dadurch muss Eve nicht nur die optische Übertragungswellenlänge, sondern zusätzlich auch den Übertragungspfad und die temporäre Übertragungszeit zwischen dem aktuell genutzten Quantenkanal zwischen zwei entsprechenden Netzwerkknoten N₁ ... N₁₂ erraten.

Die QKD-Schlüsselerzeugung wird hierbei durch ein übergeordnetes, hier nicht gezeigtes Kontrollsystem mit einem Scheduler gesteuert. Dieses legt anhand der ihm von den einzelnen Netzwerkknoten N₁ ... N₁₂ gemeldeten Schlüssel bedarfe fest, welcher Netzwerkknoten N₁ ... N₁₂ für einen bestimmten Zeitraum mit welchem anderen Netzwerkknoten N₁ ... N₁₂ gemeinsam QKD-Schlüssel erzeugt und austauscht.

Hierzu wird die Laserquantenquelle eines als Alice fungierenden Netzwerkknotens N₁ ... N₁₂ hinsichtlich der Wellenlänge der von ihr emittierten Quantenzustandsphotonen auf diejenige Wellenlänge abgestimmt, welche der Wellenlänge entspricht, die dem bestimmungsgemäß (also entsprechend der Steuervorgaben des Kontrollsystems) mit diesem Netzwerkknoten N₁ ... N₁₂ zur Erzeugung von QKD-Schlüsseln zusammenwirkenden, als Bob fungierenden Netzwerkknoten N₁ ... N₁₂ über das NxN AWG zugeführt wird. Gleichzeitig wird der Empfänger des als Bob fungierenden Netzwerkknotens N₁ ... N₁₂ ebenfalls auf diese Wellenlänge abgestimmt, so dass er die durch den als Alice fungierenden Netzwerkknoten N₁ ... N₁₂ ausgesendeten Quantenzustandsphotonen und für die Erzeugung von quantensicheren Schlüsseln (QKD-Schlüsseln) unter Nutzung eines zwischen den beiden Netzwerkknoten N₁ ... N₁₂ außerdem existierenden klassischen Protokollkanals verwenden kann.

Selbstverständlich wird auch hierbei durch das NxN Arrayed Waveguide Grating AWG im Hinblick auf die Wellenlängen der bei ihm mit unterschiedlichen Wellenlängen eingehenden Quantenzustandsphotonen ein vollständiges Frequenzshuffle erzeugt. Das heißt die von als Alice fungierenden Netzwerkknoten N₁ ... N₁₂ ausgesendeten Quantenzustandsphotonen werden in Abhängigkeit von ihrer jeweiligen Wellenlänge an unterschiedliche Eingänge des NxN AWG geführt und von dem NxN AWG unterschiedlichen als Bob fungierenden Netzwerkknoten N₁ ... N₁₂ zugeleitet.

Die zuvor im Zusammenhang mit der Fig. 1 und 2 gegebenen Erläuterungen beziehen sich auf eine Konfiguration des TOR-OTN, bei der alle Netzwerkknoten N₁ ... N₁₂ QKD-fähig sind und jeder Netzwerkknoten N₁ ... N₁₂ mit allen anderen Netzwerkknoten N₁ ... N₁₂ des OTN gemeinsam QKD-Schlüssel erzeugen und hierbei wahlweise als Alice oder als Bob fungieren kann. Jedoch sind, wie bereits früher ausgeführt, auch Konstellationen/Konfigurationen möglich, bei denen nicht jeder Netzwerkknoten N₁ ... N₁₂ im Zusammenwirken mit jedem anderen Netzwerkknoten gemeinsam genutzte QKD-Schlüssel erzeugen und austauschen kann. Letzteres kann zum Beispiel auch gegeben sein, wenn einzelne Netzwercknoten N₁ ... N₁₂ zwar mit QKD-Mitteln ausgestattet sind, aber über keine Quantenzustände für die QKD-Schlüsselerzeugung generierende Laserphotonenquelle verfügen und folglich bei der QKD-Schlüsselerzeugung nur als Bob fungieren können. Zwei derartige Netzwerkknoten N₁ ... N₁₂ können daher im Zusammenwirken keine von ihnen später gemeinsam genutzten QKD-Schlüssel unter Nutzung eines Quantenkanals erzeugen und untereinander austauschen. Solche Netzwerkknoten N₁ ... N₁₂ unterfallen daher auch der in den Patentansprüchen angesprochenen Kategorie direkt untereinander nicht über einen Quantenkanal verbundener Netzwerkknoten N₁ ... N₁₂.

Mit Blick auf die Fig. 2 sei zum Beispiel angenommen, dass die QKD-Systeme in jedem der 12 Netzwerkknoten N₁ ... N₁₂ hinsichtlich ihrer optischen Komponenten jeweils über einen hinsichtlich seiner Wellenlänge veränderbaren, das heißt abstimmbaren Sender (Laserquantenquelle) oder über einen Empfänger für den Empfang von Quantenzustandsphotonen auf unterschiedliche Wellenlängen einstellbaren, das heißt abstimmbaren Empfänger verfügen.

Gegebenenfalls kann das TOR-OTN hierbei auch so beschaffen sein, dass nur einer der Netzwerkknoten N₁ ... N₁₂ dazu ausgelegt ist, im Rahmen der QKD-Schlüsselerzeugung als Alice zu fungieren und hierbei, gesteuert durch das früher erwähnte übergeordnete Kontrollsystem wechselweise mit allen anderen, jeweils als Bob fungierenden Netzwerkknoten N₁ ... N₁₂ zusammenzuwirken. Ein mögliches Beispiel für in dem TOR-OTN unter den Netzwerkknoten N₁ ... N₁₂ hinsichtlich des Schlüsselaustausches bestehende Beziehungen ist in der nachfolgenden Tabelle 3 für 4 Netzwerkknoten N1 ... N4 des insgesamt 12 Netzwercknoten N₁ ... N₁₂ umfassenden Netzwerkes verdeutlicht. In der Tabelle steht dabei jede der angegebenen Kanalnummern für Quantenzustandsphotonen mit einer bestimmten über den betreffenden Kanal übertragenen Wellenlänge.

**Tabelle 3**

| Von | Nach | Optische Kanalnummer | Vollvermaschung | Teilvermaschung |
|---|---|---|---|---|
| N1 | N2 | 2 | Alice | Alice |
| | N3 | 3 | Alice | Alice |
| | N4 | 4 | Alice | Alice |
| N2 | N1 | 2 | Bob | Bob |
| | N3 | 4 | Bob | Bob |
| | N4 | 1 | Bob | Bob |
| N3 | N1 | 3 | Bob | |
| | N2 | 4 | Alice | Alice |
| | N4 | 2 | Alice | Alice |
| N4 | N1 | 4 | Bob | Bob |
| | N2 | 1 | Alice | |
| | N3 | 2 | Bob | Bob |

Es wurde bereits weiter oben ausgeführt, dass ein OTN, bei dem alle Netzwercknoten N₁ ... N₁₂ sowohl als Alice als auch als Bob fungieren können, im Hinblick auf die Übertragung von Quantenzustandsphotonen zur Erzeugung quantensicherer Schlüssel ein vollvermaschtes Netzwerk darstellt - selbstverständlich unter der Voraussetzung, dass - wovon im Rahmen der Erfindung stets ausgegangenen wird - jeder Netzwerkknoten N₁ ... N₁₂ des OTN über das NxN AWG mit jedem anderen Netzwerkknoten N₁ ... N₁₂ des OTN physisch mittels Glasfaser verbunden ist.

Wie aus der vorstehenden Tabelle 3 nur für die 4 Netzwerkknoten N1 ... N4 verdeutlicht, ist es jedoch auch möglich, bei einigen der Netzwerkknoten (das heißt in Bezug auf das in der Fig. 2 gezeigte Netzwerk bei einigen der 12 Netzwerkknoten N₁ ... N₁₂) den Empfänger zu entfernen, so dass diese Netzwerkknoten N1 ... N4 aus kryptographischer Sicht nur als Alice fungieren können (hier zum Beispiel N1) und gleichzeitig bei einigen der anderen Netzwerknoten N1 ... N4 den Sender (die Laserquantenquelle) zu entfernen, so dass diese Netzwerkknoten N1 ... N4 aus kryptographischer Sicht nur als Bob fungieren können (hier zum Beispiel N2), aber dennoch durch Wellenlängenabstimmung der Sender (der als Alice fungierenden Netzwerkknoten) und Empfänger (der als Bob fungierenden Netzwerkknoten) hinsichtlich der Übertragung von Quantenzustandsphotonen zur Erzeugung quantensicherer Schlüssel in dem Netzwerk eine Vollvermaschung zu realisieren (siehe Tabelle 3, 4. Spalte "Vollvermaschung").

Hierfür müssen mindestens N-2 Netzwerknoten (bei N = Gesamtanzahl der Netzwerkknoten im Netzwerk) so ausgestattet sein, dass sie sowohl als Alice als auch als Bob agieren, respektive fungieren können. Sofern genau N-2 Netzwerknoten über beide Funktionalitäten verfügen (in dem Beispiel gemäß der Tabelle 3 die Netzwerkknoten N3 und N4), darf außerdem nur 1 Netzwerkknoten ausschließlich als Alice (gemäß dem Beispiel aus Tabelle 3 der Netzwerkknoten N1) und nur ein Netzwerkknoten ausschließlich als Bob (gemäß dem Beispiel aus Tabelle 3 der Netzwerkknoten N2) fungieren können.

Da, wie gezeigt, unter Verwendung einer TOR-Net Architektur für eine Vollvermaschung nur N optische Frequenzen benötigt werden, aber beispielsweise im C-Band insgesamt 96 x 50 GHz zur Verfügung stehen, kann aus rein kanalbezogener Sicht zum Beispiel eine (Kanal-) Vollvermaschungsebene die Quantenkanäle und eine andere (Kanal-) Vollvermaschungsebene die entsprechenden konventionellen QKD-Servicekanäle bereitstellen. Bei, wie im Beispiel gemäß Fig. 2, N = 12 Netzwerkknoten sind 96/N = 8 Vollvermaschungsebenen möglich, so dass hier noch 6 weitere Vollvermaschungsebenen zur gegebenenfalls anderweiten Verwendung zur Verfügung stehen würden.

Aus einer weiteren Einsparung von Ressourcen, in deren Ergebnis weniger als N-2 der Netzwerkknoten (bei, wie gesagt, N = Gesamtanzahl der Netzwerkknoten im Netzwerk) sowohl eine Alice- als auch eine Bob-Funktionalität besitzt, resultiert eine Teilvermaschung. Ausgehend von dem Beispiel der Tabelle 3 und der Tabellenspalte "Vollvermaschung" werden bei der Teilvermaschung entsprechend der Planung, bei Netzwerkknoten, welche ursprünglich sowohl mit einer Alice-Funktionalität als auch mit einer Bob-Funktionalität ausgestattet waren (in der Tabelle 3 die Netzwerkknoten N3 und N4), die Empfangsfunktionalität, also der Empfänger für Quantenzustandsphotonen (Netzwerkknoten N3 in Tabelle 3) oder die Sendefunktionalität, also der Sender für Quantenzustandsphotonen, respektive die Laserquantenquelle (Netzwerkknoten N4 in Tabelle 3) entfernt, wie dies beispielhaft durch die Spalte "Teilvermaschung" (Tabelle 3, letzte Spalte) veranschaulicht wird.

Die größte Einsparung an Ressourcen wird hierbei erreicht, wenn (abweichend von dem in der Tabelle 3 unter "Teilvermaschung" gezeigten Beispiel) N-1 Netzwerkknoten nur über eine Alice-Funktionalität verfügen und nur noch ein Netzwerkknoten ausschließlich über eine Bob Funktionalität verfügt, weil die Empfänger (Quantendetektoren mit Kühlung) in als Bob fungierenden Netzwerkknoten verhältnismäßig komplexer und teurer sind als die zur Bereitstellung der Alice-Funktionalität benötigen Laserquantenquellen. Hierbei wäre der ausschließlich als Bob arbeitende Netzwerkknoten über das NxN AWG mit allen anderen, ausschließlich als Alice arbeitenden Netzwerkknoten verbunden und es können Schlüsselpaare erzeugt sowie über das weiter unten dargestellte Protokoll quantensichere Schlüssel auch den nicht direkt über einen Quantenkanal miteinander verbundenen Netzwerkknoten zur gemeinsamen Nutzung für die Verschlüsselung von über eine zwischen ihnen bestehende direkte konventionelle Verbindung ausgetauschten Daten bereitgestellt werden. Aus Redundanzgründen sollten dabei aber vorzugsweise mindestens zwei Netzwerkknoten mit einer Bob-Funktionalität ausgestattet werden.

Gemäß dem durch die Tabelle 3 veranschaulichten Beispiel können die QKDfähigen, aber hinsichtlich ihrer optischen QKD-Komponenten lediglich mit einer Laserquantenquelle ausgestatteten Netzwerkknoten N1 und N3 ("Teilvermaschung" gemäß letzte Spalte Tabelle 3) in einer QKD-Beziehung nur als Alice fungieren und sind daher, dem vorstehend erläuterten Verständnis folgend, direkt untereinander nicht über einen Quantenkanal verbunden. Dennoch sollen die Netzwerkknoten N1 und N3 QKD-Schlüssel zur Verschlüsselung untereinander auszutauschender Daten nutzen können.

Zur Kompensation eines kostenoptimierten Aufbaus, bei dem nur einige der Netzwerkknoten (zum Beispiel die Netzwerkknoten mit ungerader Nummer - N1, N3, ...) über eine Laserquantenquelle, aber, hinsichtlich der optischen, die QKD-Schlüsselzeugung betreffenden Komponenten, nicht über einen Empfänger verfügen, muss ebenfalls das schon wiederholt angesprochene übergeordnete Kontrollsystem (Key Management System) einen entsprechenden Austausch von QKD-Schlüsseln organisieren. Die Bereitstellung quantensicherer Schlüssel, das heißt von QKD-Schlüsseln zur gemeinsamen Verwendung durch die Netzwercknoten, die nur sendende Komponenten enthalten, also ausschließlich als Alice fungieren können, zum Beispiel N1 und Nx kann hierbei, gesteuert durch dieses Kontrollsystem beispielsweise wie nachfolgend dargestellt erfolgen.
I. Der Netzwerkknoten N1 fordert über das Kontrollsystem einen Schlüssel vom Netzwerkknoten Nx an.
II. Das Kontrollsystem bestimmt einen Netzwerkknoten, der nur einen Empfänger für Quantenzustandsphotonen aufweist, zum Beispiel den Netzwerkknoten N2, und der sowohl mit N1 als auch mit Nx unter Anwendung eines QKD-Verfahrens quantensichere Schlüssel (QKD-Schlüssel) ausgetauscht hat, und fordert diesen auf:
   a. Suche einen Schlüssel S₁₂ und eine Schlüssel-ID (Identifikator) SID₁₂ mit Partner N1, das heißt Netzwerkknoten N1 aus dem Schlüsselspeicher heraus.
   b. Suche einen Schlüssel S₂ₓ und eine Schlüssel-ID SID₂ₓ mit Partner Nx aus dem Schlüsselspeicher heraus.
   c. Führe eine bitweise XOR Verknüpfung der Schlüssel S₁₂ und S₂ₓ durch und erhalte S₁₂ ⊗ S₂ₓ.
   d. Sende die XOR verknüpften Schlüssel S₁₂ ⊗ S₂ₓ mit der Schlüssel ID SID₁₂ und mit einer Zufallszahl RND über einen klassischen Kanal zum Netzwerkknoten N1 (den anfragenden, respektive einen QKD-Schlüssel anfordernden Netzwerkknoten).
   e. Sende die multiplizierten Schlüssel S₁₂ ⊗ S₂ₓ mit der Schlüssel ID SID₂ₓ und derselben Zufallszahl RND über einen klassischen Kanal zum Netzwerkknoten Nx.
III. Der Netzwerkknoten N1 liest den zu der Schlüssel ID SID₁₂ passenden Schlüssel aus seinem Schlüsselspeicher aus. Danach führt er eine bitweise XOR Verknüpfung des Schlüssel S₁₂ ⊗ S₂ₓ ⊗ S₁₂ = S₂ₓ aus und speichert den Schlüssel S₂ₓ zusammen mit der Schlüssel-ID dienenden Zufallszahl RND in Zuordnung zum Kommunikationspartner, respektive Netzwerkknoten Nx in seinem Schlüsselspeicher.
IV. Der Netzwerkknoten Nx fragt den zu der Schlüssel ID SID₂ₓ passenden Schlüssel aus seinem Schlüsselspeicher an. Danach speichert Nx den Schlüssel S₂ₓ zusammen mit der Schlüssel-ID RND und Partner N1 in seinem Schlüsselspeicher.

Der Vorteil der dem vorstehenden Ablauf zugrundeliegenden Netzwerkkonfiguration liegt in der reduzierten Anzahl der paarweisen QKD-Systeme. Es können allerdings auch nur weniger quantensichere Schlüssel erzeugt werden. Dieser Vorteil wird, wie gesagt, erkauft durch ein vergrößertes Kontrollsystem, welches nun aktiv die Berechnung und Verteilung von quantensicheren Schlüsseln unter den teilnehmenden QKD-Knoten steuert. Da das Kontrollsystem aber nur steuernd wirkt, es also nicht mit der Weiterleitung oder der Verarbeitung kryptographischer Schlüssel vertraut wird, ist diese Lösung auch für Anwender mit hohem Sicherheitsbedarf verwendbar.

Abschließend sollen nochmals die Vorteile der vorgestellten Lösung zusammengefasst werden. Diese weist demnach folgende Vorteile auf:
- Rein passives Netzwerk zur Realisierung von (Nx(N-1)/2) gegebenenfalls vollvermaschten Quantenkanälen in einem Radius von ca. 70 km.
- Realisierung eines gemanagten Netzwerkes mit Quality of Service. Dazu eine Wiederverwendung bereits existenter Netzwerkarchitekturen.
- Verwendung der optischen (das heißt physischen) Verbindungen sowohl als klassischer als auch als quantenoptischer Kanal. Sollte eine Strecke von einem Netzwerkknoten zu einem anderen Netzwerkknoten nicht für einer QKD Verbindung verwendet werden, steht diese Verbindung einer klassischen Kommunikation über die DWDM TOR-Net Architektur zur Verfügung.
- Notwendigkeit eines minimalen Kontrollsystems, welches ausschließlich als Scheduler arbeitet.
- Kryptographische Schlüssel liegen ausschließlich an den Netzwerkknoten vor, das heißt keine speziell geschützten Trusted Nodes als Transit Netzwerkknoten erforderlich. Der Betreiber des quantenoptischen Netzwerks ist selbst nicht in der Lage vertrauenswürdige Information in Erfahrung zu bringen.
- Durch die Einfachheit der Architektur lassen sich mit geringem Aufwand METRO-QKD-Netze aufbauen und betreiben.
   ∘ TOR-OTN-Kernnetze haben einen rein passiven Aufbau, dadurch sind sie kostengünstig aufzubauen, zu betreiben und zu warten.
   ∘ Physikalisch folgen TOR-OTN vorzugsweise einer sternförmigen Architektur, bei der alle Verbindungen über einen, zwei oder drei zentrale Netzwerkknoten (entsprechend den betreiberseitigen Anforderungen an die Redundanz der Netzverbindungen) laufen.
   ∘ Im Sternpunkt, respektive im zentralen Netzwerkknoten befindet sich ein passives optisches NxN AWG, welches die direkte Verschaltung der DWDM-Kanäle und eine direkte optische Verbindung aller Netzwerkknoten zu allen anderen Netzwerkknoten zulässt. Jeder Netzwerkknoten ist somit in der Lage, jeden anderen Netzwercknoten auf einer festgelegten Lichtwellenlänge anzusprechen.
   ∘ Die Verbindung der optischen und der IP-Netzwerkebene erfolgt über DWDM-Transponder in Routern.
   ∘ Somit kann jeder Endknoten mit jedem anderen Endknoten sowohl eine klassische als auch eine quantenoptische Verbindung aufbauen.
- Die Optimierung des TOR-OTN kann nach verschiedenen Kriterien erfolgen:
   ∘ das Netz kann entsprechend den Redundanzanforderungen des Netzbetreibers, mit bestimmter Anzahl zentraler Netzwerkknoten oder mit Ringstrukturen realisiert werden, so dass somit beliebige disjunkte Pfade genutzt werden können.
   ∘ Das Netz kann nach minimaler Latenz zwischen Verbindungen optimiert werden. So lassen sich Architekturen für die minimale Latenz aller Verbindungen oder auch nur dedizierter Verbindungen finden.
- Die Sicherheit gegenüber Angriffen kann durch diese Netzarchitektur erhöht werden, wobei
   ∘ unterschiedliche Quantenkanäle zwischen den verschiedenen Netzwerkknoten durch das Kontrollsystem zu verschiedenen Zeiten und auf unterschiedlichen optischen Wellenlängen genutzt werden können.
   ∘ Dadurch wird der Möglichkeitsraum für die Quantenverbindungen jeweils potenziert.

Vorsorglich sei noch darauf hingewiesen, dass durch die in den Zeichnungen nicht erfolgte Tieferstellung des Indexes der einzelnen Netzwerkknoten N₁ ... N₁₂ gegenüber der hier im Text im Allgemeinen (insbesondere in den Patentansprüchen), aber auch nicht durchgängig verwendeten Schreibweise mit einem tiefer gestellten Index kein inhaltlicher Unterschied zum Ausdruck gebracht werden soll.

## Patentansprüche

1. Verfahren zur Erzeugung und Verteilung quantensicherer Schlüssel in einem mindestens drei Netzwerkknoten (N₁ ... Nₙ) umfassenden optischen Transport-Netzwerk OTN, wobei optische Signale in dem OTN zwischen den Netzwerkknoten (N₁ ... Nₙ) über faseroptische Verbindungen (L₁ ... Lₙ) und über ein passives NxN Arrayed Waveguide Grating AWG des OTN durch transparentes optisches Routing TOR jeweils Ende-zu-Ende optisch transparent übertragen werden und wobei durch Netzwerkknoten (N₁ ... Nₙ) des OTN jeweils paarweise Schlüssel als gemeinsame quantensichere Schlüssel nach einem Verfahren der Quantum Key Distribution erzeugt und ausgetauscht werden, **dadurch gekennzeichnet, dass** zwischen Netzwerkknoten (N₁ ... Nₙ) des OTN jeweils über das NxN AWG geführte, hinsichtlich der optischen Wellenlänge der über sie zur Erzeugung quantensicherer Schlüssel durch Quantenzustandsphotonen übertragenen Quantenzustände abstimmbare Quantenkanäle derart aufgebaut werden, dass für jeden Quantenkanal eine von allen anderen Quantenkanälen verschiedene optische Wellenlänge verwendet wird, indem
- von mindestens einem, hierbei aus kryptographischer Sicht als Bob fungierenden Netzwerkknoten (N₁ ... Nₙ) Quantenzustandsphotonen, nämlich Quantenzustände zur QKD-Schlüsselerzeugung vermittelnde Photonen, unterschiedlicher Wellenlängen empfangen werden, die von mehreren, hierbei aus kryptographischer Sicht jeweils als Alice fungierenden, Quantenzustandsphotonen jeweils mit einer dieser Wellenlängen generierenden Netzwerkknoten (N₁ ... Nₙ) ausgesendet werden
und
- durch mindestens einen, hierbei aus kryptographischer Sicht als Alice fungierenden Netzwerkknoten (N₁ ... Nₙ) Quantenzustandsphotonen wechselnder Wellenlänge generiert und an mindestens zwei, hierbei aus kryptographischer Sicht jeweils als Bob fungierende Netzwerkknoten (N₁ ... Nₙ) übertragen werden, welche sich hinsichtlich ihrer Empfangswellenlänge für durch den mindestens einen als Alice fungierenden Netzwerkknoten (N₁ ... Nₙ) ausgesendete Quantenzustandsphotonen des diese aussendenden mindestens einen Netzwerkknotens (N₁ ... Nₙ) voneinander unterscheiden.

2. Verfahren nach Anspruch 1, **dadurch gekennzeichnet, dass** ein Empfänger mindestens eines als Bob fungierenden Netzwerkknotens (N₁ ... Nₙ) innerhalb des für die Übertragung von Quantenzustandsphotonen in dem OTN verwendeten Wellenlängenbereichs hinsichtlich seiner Empfangswellenlänge für Quantenzustandsphotonen durchgestimmt wird.

3. Verfahren nach Anspruch 1, **dadurch gekennzeichnet, dass** eine Laserquantenquelle mindestens eines als Alice fungierenden, Quantenzustandsphotonen zur QKD-Schlüsselerzeugung an mehrere Netzwerkknoten (N₁ ... Nₙ) aussendenden Netzwerkknotens (N₁ ... Nₙ) hinsichtlich der Wellenlänge der von ihr generierten Quantenzustandsphotonen innerhalb eines ihr möglichen Wellenlängenbereiches fortwährend durchgestimmt wird, wobei der mindestens eine als Alice fungierende Netzwerkknoten (N₁ ... Nₙ) bei jedem Durchlauf des von seiner Laserquantenquelle abgedeckten Wellenlängenbereiches jeweils einmal Quantenzustandsphotonen mit der Empfangswellenlänge für Quantenzustandsphotonen jedes der mit ihm bei der QKD-Schlüsselerzeugung als Bob zusammenwirkenden zweiten Netzwerkknoten (N₁ ... Nₙ) aussendet.

4. Verfahren nach Anspruch 1 oder 2, **dadurch gekennzeichnet, dass** alle Netzwerkknoten (N₁ ... Nₙ) des OTN kontinuierlich ihren jeweiligen Schlüsselbedarf an ein dafür in dem OTN vorgesehenes übergeordnetes Kontrollsystem melden und durch einen Scheduler dieses Kontrollsystems gesteuert wird, welche der über Quantenkanäle miteinander verbundenen Netzwerkknoten (N₁ ... Nₙ) zu welchen Zeitpunkten gemeinsam quantensichere Schlüssel nach einem QKD-Verfahren generieren und miteinander austauschen.

5. Verfahren nach Anspruch 4, **dadurch gekennzeichnet, dass** mindestens ein Quantenzustandsphotonen mit unterschiedlichen Wellenlängen empfangender Netzwerkknoten (N₁ ... Nₙ), gesteuert durch das übergeordnete Kontrollsystem, mit allen als Alice in dem OTN fungierenden Netzwerkknoten (N₁ ... Nₙ) gemeinsam quantensichere Schlüssel nach einem QKD-Verfahren erzeugt und austauscht und hierbei jeweils als Bob fungiert.

6. Verfahren nach Anspruch 4, **dadurch gekennzeichnet, dass**, gesteuert durch das übergeordnete Kontrollsystem, jeweils durch eine Bitsequenz repräsentierte QKD-Schlüssel, nämlich nach einem QKD-Verfahren erzeugte quantensichere Schlüsel, von über diese QKD-Schlüssel verfügenden Netzwerkknoten (N₁ ... Nₙ) an andere, diese zur gemeinsamen Nutzung anfordernde, direkt untereinander nicht über einen Quantenkanal verbundene Netzwerkknoten (N₁ ... Nₙ) des OTN über klassischen Kanäle nutzende Verbindungen übertragen werden, wobei diese QKD Schlüssel vor ihrer Übertragung und damit vor ihrer Auslieferung an die sie anfordernden Netzwerkknoten (N₁ ... Nₙ) mittels einer auf sie angewendeten Key Derivation Function, nämlich mittels einer Schlüsselauslieferungsfunktion, nach einer in allen beteiligten Netzwerkknoten (N₁ ... Nₙ) hinterlegten Prozessierungsvorschrift unter Verwendung mindestens eines anderen Schlüssels verschlüsselt oder in einer bei dem jeweils für ihren Empfang bestimmten Netzwerkknoten (N₁ ... Nₙ) eineindeutig umkehrbaren Weise in eine andere Bitsequenz überführt werden.

7. Verfahren nach Anspruch 6, **dadurch gekennzeichnet, dass** von nicht über einen Quantenkanal zur gemeinsamen Nutzung verfügenden Netzwerkknoten (N₁ ... Nₙ) angeforderte QKD-Schlüssel gemäß der Key Derivation Function in der Weise prozessiert werden, dass sie vor jedem Übertragungsvorgang jeweils mit mindestens einem anderen, auch bei dem für den Empfang der jeweils durch die Verknüpfung entstehenden Bitsequenz bestimmten Netzwerkknoten (N₁ ... Nₙ) vorliegenden QKD-Schlüssel bitweise XOR-verknüpft werden.

8. Verfahren nach einem der Ansprüche 1 bis 7, **dadurch gekennzeichnet, dass** sich die gemeinsam quantensichere Schlüssel nach einem QKD-Verfahren erzeugenden Netzwerkknoten (N₁ ... Nₙ) sowie von derartigen Netzwerkknoten (N₁ ... Nₙ) quantensichere Schlüssel empfangende, mit ihnen direkt nicht über einen Quantenkanal verbundene Netzwerkknoten (N₁ ... Nₙ) untereinander mittels PQ-Zertifikaten, das heißt mittels nach Verfahren der Post Quantum Cryptography erzeugten Zertifikaten, authentifizieren.

9. Verfahren nach einem der Ansprüche 1 bis 8, **dadurch gekennzeichnet, dass** die zur Übertragung der Quantenzustandsphotonen genutzten, über das NxN AWG geführten faseroptischen Verbindungen (L₁ ... Lₙ) in Zeiträumen, in denen diese nicht für einen QKD-Schlüsselaustausch benötigt werden, als klassischer Kanal zur Übertragung von Daten verwendet werden.

10. Optisches Transport-Netzwerk OTN mit mindestens drei Netzwerkknoten, in welchem optische Signale zwischen den Netzwerkknoten (N₁ ... Nₙ) über faseroptische Verbindungen (L₁ ... Lₙ) und über ein passives NxN Arrayed Waveguide Grating AWG des OTN durch transparentes optisches Routing TOR jeweils Ende-zu-Ende optisch transparent übertragen und durch über einen Quantenkanal sowie über einen klassischen Protokollkanal miteinander verbundene Netzwerkknoten (N₁ ... Nₙ) jeweils paarweise QKD-Schlüssel als gemeinsame quantensichere Schlüssel nach einem Verfahren der Quantum Key Distribution erzeugt und ausgetauscht werden, **dadurch gekennzeichnet,**
- **dass** mindestens ein bei der QKD-Schlüsselerzeugung aus kryptographischer Sicht als Bob fungierender, das heißt Quantenzustandsphotonen empfangender Netzwerkknoten (N₁ ... Nₙ) einen hinsichtlich seiner Empfangswellenlänge abstimmbaren Empfänger aufweist, welcher wechselnd Quantenzustandsphotonen, nämlich Quantenzustände zur QKD-Schlüsselerzeugung vermittelnde Photonen, mindestens zweier unterschiedlicher Wellenlängen empfängt, wobei dieser mindestens eine Quantenzustandsphotonen unterschiedlicher Wellenlängen empfangende Netzwerkknoten (N₁ ... Nₙ) zur QKD-Schlüsselerzeugung mit mindestens zwei, dabei aus kryptographischer Sicht jeweils als Alice fungierenden, Quantenzustandsphotonen unterschiedlicher Wellenlängen aussendenden Netzwerkknoten (N₁ ... Nₙ) über jeweils einen, unter Einbeziehung des NxN AWG, zu jedem dieser Netzwerkknoten (N₁ ... Nₙ) ausgebildeten Quantenkanal verbunden ist
und
- **dass** mindestens ein bei der QKD-Schlüsselerzeugung aus kryptographischer Sicht als Alice fungierender, das heißt Quantenzustandsphotonen aussendender Netzwerkknoten (N₁ ... Nₙ) eine Laserquantenquelle aufweist, welche Quantenzustandsphotonen wechselnd mit mindestens zwei unterschiedlichen Wellenlängen emittiert, wobei dieser mindestens eine, die von seiner Laserquantenquelle emittierten Quantenzustandsphotonen aussendende Netzwerkknoten (N₁ ... Nₙ) zur QKD-Schlüsselerzeugung mit mindestens zwei, dabei aus kryptographischer Sicht jeweils als Bob fungierenden, sich hinsichtlich ihrer Empfangswellenlänge für Quantenzustandsphotonen voneinander unterscheidenden Netzwerkknoten (N₁ ... Nₙ) über jeweils einen, unter Einbeziehung des NxN AWG, zu jedem dieser Netzwerkknoten (N₁ ... Nₙ) ausgebildeten Quantenkanal verbunden ist.

11. Optisches Transport-Netzwerk OTN nach Anspruch 10, **dadurch gekennzeichnet, dass** dieses mehrere als Alice fungierende, das heißt Quantenzustandsphotonen zur QKD-Schlüsselerzeugung aussendende Netzwerkknoten (N₁ ... Nₙ) und ein Kontrollsystem mit einem Scheduler umfasst, welcher dazu ausgebildet ist, entsprechend einem von den Netzwerkknoten (N₁ ... Nₙ) des OTN kontinuierlich an das Kontrollsystem gemeldeten Schlüsselbedarf zu steuern, welche der über Quantenkanäle miteinander verbundenen Netzwerkknoten (N₁ ... Nₙ) zu welchen Zeitpunkten gemeinsam quantensichere Schlüssel nach einem QKD-Verfahren generieren und miteinander austauschen.

12. Optisches Transport-Netzwerk OTN nach Anspruch 10 oder 11 mit N Netzwerkknoten, **dadurch gekennzeichnet, dass** das OTN hinsichtlich der Übertragung von Quantenzustandsphotonen zur Erzeugung quantensicherer Schlüssel als vollvermaschtes Netzwerk ausgebildet ist, wobei mindestens N-2 der N Netzwerkknoten (N₁ ... Nₙ) des OTN dazu ausgebildet sind, aus kryptographischer Sicht sowohl als Alice als auch als Bob zu fungieren.

13. Optisches Transport-Netzwerk OTN nach einem der Ansprüche 10 bis 12, **dadurch gekennzeichnet, dass** der Empfänger mindestens eines als Bob fungierenden Netzwerkknotens (N₁ ... Nₙ) einen optischen Detektor umfasst, mittels welchem er innerhalb eines ihm möglichen Wellenlängenbereiches auf verschiedene Empfangswellenlängen abstimmbar ist.

## Claims

1. Method for generating and distributing quantum secure keys in an optical transport network OTN comprising at least three network nodes (N₁... Nₙ) wherein optical signals are each transferred end-to-end in an optically transparent manner between the network nodes (N₁... Nₙ) via fiber-optic connections (L₁... Lₙ) and via a passive NxN Arrayed Waveguide Grating AWG of the OTN by transparent optical routing TOR and wherein keys are each generated and exchanged in pairs as common quantum secure keys according to a method of quantum key distribution by network nodes (N₁... Nₙ) of the OTN, **characterized in that** quantum channels are established in each case between network nodes (N₁... Nₙ) of the OTN, which are tunable with respect to the optical wavelength of the quantum states transferred via the NxN AWG by quantum state photons to generate quantum secure keys such that an optical wavelength different from all other quantum channels is used for each quantum channel, **in that**
- by at least one network node (N₁... Nₙ), functioning in this case as Bob from a cryptographic aspect, quantum state photons are received, namely photons conveying quantum states for QKD key generation, of different wavelengths are received, which are emitted by multiple network nodes (N₁... Nₙ), each functioning in this case as Alice from a cryptographic aspect and generating quantum state photons each having one of these wavelengths and
- by at least one network node (N₁... Nₙ), functioning in this case as Alice from a cryptographic aspect, quantum state photons of changing wavelength are generated and transferred to at least two network nodes (N₁... Nₙ), each functioning in this case as Bob from a cryptographic aspect, which differ from one another with respect to their reception wavelength for quantum state photons emitted by the at least one network node (N₁... Nₙ) functioning as Alice of this at least one network node (N₁... Nₙ) emitting them.

2. Method as claimed in claim 1, **characterized in that** a receiver of at least one network node (N₁... Nₙ) functioning as Bob is swept with respect to its reception wavelength for quantum state photons within the wavelength range used for the transfer of quantum state photons in the OTN.

3. Method as claimed in claim 1, **characterized in that** a laser quantum source of at least one network node (N₁... Nₙ), which functions at least as Alice and emits quantum state photons for QKD key generation to multiple network nodes (N₁... Nₙ) is continuously swept with respect to the wavelength of the quantum state photons generated by it within one of its possible wavelength ranges, wherein the at least one network node (N₁... Nₙ) functioning as Alice emits quantum state photons having the reception wavelength for quantum state photons of each second network node (N₁... Nₙ) interacting with it as Bob during the QKD key generation during each pass through the wavelength range covered by its laser quantum source.

4. Method as claimed in claim 1 or 2, **characterized in that** all network nodes (N₁... Nₙ) of the OTN continuously report their respective key requirement to a higher-order supervision system provided for this purpose in the OTN and it is controlled by a scheduler of this supervision system which of the network nodes (N₁... Nₙ) connected to one another via quantum channels generate common quantum secure keys according to a QKD method and exchange them with one another at which times.

5. Method as claimed in claim 4, **characterized in that** at least one network node (N₁... Nₙ) receiving quantum state photons having different wavelengths, controlled by the higher-order supervision system, generates common quantum secure keys according to a QKD method and exchanges them with all network nodes (N₁... Nₙ) in the OTN functioning as Alice and functions in each case as Bob in this case.

6. Method as claimed in claim 4, **characterized in that**, controlled by the higher-order supervision system, QKD keys each represented by a bit sequence, namely quantum secure keys generated according to a QKD method, are transferred from network nodes (N₁... Nₙ) having these QKD keys to other network nodes (N₁... Nₙ) of the OTN, which request these keys for common use and are not directly connected among one another via a quantum channel, via connections using classic channels, wherein these QKD keys, before their transfer and therefore before their delivery to the network nodes (N₁... Nₙ) requesting them, are encrypted by means of a key derivation function applied thereto, namely by means of a key delivery function, according to a processing rule stored in all participating network nodes (N₁... Nₙ) using at least one other key or are converted into another bit sequence in a way reversible one to one at the respective network node (N₁... Nₙ) intended for their reception.

7. Method as claimed in claim 6, **characterized in that** QKD keys requested by network nodes (N₁... Nₙ) that do not have a quantum channel for common use are processed according to the key derivation function in such a manner that before each transfer procedure, they are each XOR-linked bit by bit to at least one other QKD key, also present at the respective network node (N₁... Nₙ) intended for the reception of the respective bit sequence arising due to the linkage.

8. Method as claimed in any one of claims 1 to 7, **characterized in that** the network nodes (N₁... Nₙ) generating common quantum secure keys according to a QKD method and network nodes (N₁... Nₙ) receiving quantum secure keys from such network nodes (N₁... Nₙ) but not directly connected to them via a quantum channel authenticate themselves among one another by means of PQ certificates, i.e. by means of certificates generated according to methods of post quantum cryptography.

9. Method as claimed in any one of claims 1 to 8, **characterized in that** the fiber-optic connections (L₁... Lₙ), which are used for transferring the quantum state photons and are guided via the NxN AWG are used, in periods of time in which they are not required for a QKD key exchange, as classic channels for transferring data.

10. Optical transport network OTN having at least three network nodes in which optical signals are each transferred optically transparent end-to-end between the network nodes (N₁... Nₙ) via fiber-optic connections (L₁... Lₙ) and via a passive NxN Arrayed Waveguide Grating AWG of the OTN by transparent optical routing TOR and QKD keys are each generated and exchanged in pairs as common quantum secure keys according to a method of quantum key distribution by network nodes (N₁... Nₙ) connected to one another via a quantum channel and via a classic protocol channel, **characterized in that**
- at least one network node (N₁... Nₙ) functioning in the QKD key generation as Bob from a cryptographic aspect, i.e. receiving quantum state photons, has a receiver tunable with respect to its /reception wavelength, which alternately receives quantum state photons, namely photons conveying quantum states for the QKD key generation, of at least two different wavelengths, wherein this at least one network node (N₁... Nₙ) receiving quantum state photons of different wavelengths is connected for the QKD key generation to at least two network nodes (N₁... Nₙ) each functioning here as Alice from a cryptographic aspect and emitting quantum state photons of different wavelengths, via a quantum channel designed in each case incorporating the NxN AWG, for each of these network nodes (N₁... Nₙ), and
- at least one network node (N₁... Nₙ) functioning in the QKD key generation as Alice from a cryptographic aspect, i.e. emitting quantum state photons, has a laser quantum source which alternately emits quantum state photons having at least two different wavelengths, wherein this at least one network node emitting the quantum state photons emitted by laser quantum source is connected to at least two network nodes (N₁... Nₙ), which each function here as Bob from a cryptographic aspect, and differ from one another with respect to their reception wavelength for quantum state photons, via in each case a quantum channel formed, with incorporation of the NxN AWG, to each of these network nodes (N₁... Nₙ).

11. Optical transport network OTN as claimed in claim 10, **characterized in that** it comprises multiple network nodes (N₁... Nₙ) functioning as Alice, i.e. emitting quantum state photons for QKD key generation, and a supervision system having a scheduler, which is designed to control, according to a key demand continuously reported to the supervision system by the network nodes (N₁... Nₙ) of the OTN, which of the network nodes (N₁... Nₙ) connected to one another via quantum channels generate common quantum secure keys according to a QKD method and exchange them with one another at which times.

12. Optical transport network OTN as claimed in claim 10 or 11 having N network nodes, **characterized in that** the OTN is designed with respect to the transfer of quantum state photons for generating quantum secure keys as a fully meshed network, wherein at least N -2 of the N network nodes (N₁... Nₙ) of the OTN are designed to function both as Alice and as Bob from a cryptographic aspect.

13. Optical transport network OTN as claimed in any one of claims 10 to 12, **characterized in that** the receiver of at least one network node (N₁... Nₙ) functioning as Bob comprises an optical detector, by means of which it is tunable within a wavelength range possible for it to various reception wavelengths.

## Revendications

1. Procédé pour la génération et la distribution de clés de sécurité quantique dans un réseau de transport optique OTN comprenant au moins trois nœuds de réseau (N₁ ... Nₙ), dans lequel des signaux optiques sont transmis de bout en bout par routage optiquement transparent TOR dans l'OTN entre les nœuds de réseau (N₁ ... Nₙ) via des connexions de fibres optiques (L₁ ... Lₙ) et via un réseau sélectif planaire AWG NxN passif de l'OTN et dans lequel des nœuds de réseau (N₁ ... Nₙ) de l'OTN génèrent et échangent des clés deux par deux sous forme de clés de sécurité quantique communes selon un procédé de distribution quantique de clés, **caractérisé en ce que** sont constitués entre les nœuds de réseau (N₁ ... Nₙ) de l'OTN des canaux quantiques passant par l'AWG NxN qui peuvent être harmonisés en ce qui concerne la longueur d'onde optique des états quantiques qu'ils transmettent par des photons d'état quantique afin de générer des clés de sécurité quantique, de telle manière qu'une longueur d'onde optique différente de tous les autres canaux quantiques est utilisée pour chaque canal quantique par le fait que
- au moins un nœud de réseau (N₁ ... Nₙ) faisant fonction de Bob du point de vue cryptographique reçoit des photons d'état quantique, c'est-à-dire des photons transmettant des états quantiques pour la génération de clés QKD, de différentes longueurs d'onde, qui sont émis par plusieurs nœuds de réseau (N₁ ... Nₙ) faisant chacun fonction d'Alice du point de vue cryptographique et générant chacun des photons d'état quantique à une de ces longueurs d'onde
et
- au moins un nœud de réseau (N₁ ... Nₙ) faisant fonction d'Alice du point de vue cryptographique génère des photons d'état quantique de longueur d'onde variable et les transmet à au moins deux nœuds de réseau (N₁ ... Nₙ) faisant fonction de Bob du point de vue cryptographique, qui diffèrent par leur longueur d'onde de réception des photons d'état quantique de cet au moins un nœud de réseau (N₁ ... Nₙ) émetteur émis par l'au moins un nœud de réseau (N₁ ... Nₙ) faisant fonction d'Alice.

2. Procédé selon la revendication 1, **caractérisé en ce qu'**un récepteur d'au moins un nœud de réseau (N₁ ... Nₙ) faisant fonction de Bob est ajusté dans la plage de longueurs d'onde utilisée pour la transmission de photons d'état quantique dans l'OTN en ce qui concerne sa longueur d'onde de réception des photons d'état quantique.

3. Procédé selon la revendication 1, **caractérisé en ce qu'**une source quantique laser d'au moins un nœud de réseau (N₁ ... Nₙ) faisant fonction d'Alice émettant des photons d'état quantique pour la génération de clés QKD vers plusieurs nœuds de réseau (N₁ ... Nₙ) est ajustée en continu en ce qui concerne la longueur d'onde des photons d'état quantique qu'elle génère dans sa plage de longueurs d'onde possible, l'au moins un nœud de réseau (N₁ ... Nₙ) qui fait fonction d'Alice émettant, à chaque passage dans la plage de longueurs d'onde couverte par sa source quantique laser, un photon d'état quantique à la longueur d'onde de réception des photons d'état quantique de chacun des deuxièmes nœuds de réseau (N₁ ... Nₙ) coopérant avec elle pour la génération de clés QKD.

4. Procédé selon la revendication 1 ou 2, **caractérisé en ce que** tous les nœuds de réseau (N₁ ... Nₙ) de l'OTN signalent en continu leur besoin de clés respectif à un système de contrôle de niveau supérieur prévu pour cela dans l'OTN et un superviseur de ce système de contrôle commande lesquels des nœuds de réseau (N₁ ... Nₙ) reliés entre eux par des canaux quantiques génèrent et échangent à quel moment ensemble des clés de sécurité quantique selon un procédé QKD.

5. Procédé selon la revendication 4, **caractérisé en ce qu'**au moins un nœud de réseau (N₁ ... Nₙ) recevant des photons d'état quantique à différentes longueurs d'onde génère des clés de sécurité quantique en commun avec tous les nœuds de réseau (N₁ ... Nₙ) faisant fonction d'Alice dans l'OTN sous le contrôle du système de contrôle supérieur selon un procédé QKD et sert fait alors respectivement fonction de Bob.

6. Procédé selon la revendication 4, **caractérisé en ce que**, sous le contrôle du système de contrôle supérieur, des clés QKD représentées chacune par une séquence de bits, c'est-à-dire des clés de sécurité quantique générées par un procédé QKD, sont transmises par des nœuds de réseau (N₁ ... Nₙ) disposant de ces clés QKD, par des liaisons utilisant des canaux classiques, à d'autres nœuds de réseau (N₁ ... Nₙ) de l'OTN reliés les uns aux autres directement et pas par un canal quantique qui les demandent pour une utilisation en commun, ces clés QKD étant cryptées, avant leur transmission donc avant leur livraison aux nœuds de réseau (N₁ ... Nₙ) qui les demandent, au moyen d'une fonction de dérivation de clé qui leur est appliquée, c'est-à-dire au moyen d'une fonction de livraison de clés, selon une consigne de traitement enregistrée dans tous les nœuds de réseau (N₁ ... Nₙ) participants, en utilisant au moins une autre clé, ou transférées dans une autre séquence de bits d'une manière réversible de façon biunivoque dans les nœuds de réseau (N₁ ... Nₙ) destinés respectivement à les recevoir.

7. Procédé selon la revendication 6, **caractérisé en ce que** des clés QKD demandées par des nœuds de réseau (N₁ ... Nₙ) d'un canal quantique à utiliser en commun sont traitées selon la fonction de dérivation de clé de telle manière qu'avant chaque opération de transmission, chacune est associée bit par bit par une liaison XOR à au moins une autre clé QKD qui est aussi présente dans le nœud de réseau (N₁ ... Nₙ) destiné à recevoir la séquence de bits créée par la liaison en question.

8. Procédé selon l'une des revendications 1 à 7, **caractérisé en ce que** les nœuds de réseau (N₁ ... Nₙ) générant en commun des clés de sécurité quantique et les nœuds de réseau (N₁ ... Nₙ) recevant des clés de sécurité quantique de tels nœuds de réseau (N₁ ... Nₙ) qui sont reliés directement mais pas par un canal quantique à ceux-ci s'authentifient entre eux au moyen de certificats PQ, c'est-à-dire au moyen de certificats générés par des procédés de cryptographie post-quantique.

9. Procédé selon l'une des revendications 1 à 8, **caractérisé en ce que** les connexions par fibres optiques (L₁ ... Lₙ) passant par l'AWG NxN qui servent à la transmission des photons d'état quantique sont utilisées, pendant les intervalles de temps où elles ne sont pas requises pour un échange de clés QKD, comme canal classique pour la transmission de données.

10. Réseau de transport optique OTN avec au moins trois nœuds de réseau (N₁ ... Nₙ), dans lequel des signaux optiques sont transmis de bout en bout par routage optiquement transparent TOR dans l'OTN entre les nœuds de réseau (N₁ ... Nₙ) via des connexions de fibres optiques (L₁ ... Lₙ) et via un réseau sélectif planaire AWG NxN passif de l'OTN et des clés QKD sont générées et échangées deux par deux pour servir de clés de sécurité quantique selon un procédé de distribution de clés quantiques via des nœuds de réseau (N₁ ... Nₙ) reliés entre eux par un canal quantique et par un canal de protocole classique, **caractérisé en ce que**
- au moins un nœud de réseau (N₁ ... Nₙ) faisant fonction de Bob du point de vue cryptographique lors de la génération de clés QKD, c'est-à-dire recevant des photons d'état quantique, comporte un récepteur dont la longueur d'onde de réception est ajustable, qui reçoit alternativement des photons d'état quantique, c'est-à-dire des photons transmettant des états quantiques pour la génération de clés QKD, d'au moins deux longueurs d'onde différentes, ce nœud de réseau (N₁ ... Nₙ) qui reçoit des photons d'état quantique de longueurs d'onde différentes étant relié pour la génération de clés QKD à au moins deux nœuds de réseau (N₁ ... Nₙ) qui font fonction d'Alice du point de vue cryptographique et génèrent des photons d'état quantique de longueurs d'onde différentes par un canal quantique respectif, formé en intégrant l'AWG NxN, vers chacun de ces nœuds de réseau (N₁ ... Nₙ) et
- **en ce qu'**au moins un nœud de réseau (N₁ ... Nₙ) faisant fonction d'Alice du point de vue cryptographique lors de la génération de clés QKD, c'est-à-dire émettant des photons d'état quantique, comporte une source quantique laser qui émet des photons d'état quantique alternativement à au moins deux longueurs d'onde différente, cet au moins un nœud de réseau (N₁ ... Nₙ) qui transmet les photons d'état quantique émis par sa source quantique laser étant relié, pour la génération de clés QKD, à au moins deux nœuds de réseau (N₁ ... Nₙ) qui font fonction de Bob du point de vue cryptographique, qui sont différents en ce qui concerne leur longueur d'onde de réception des photons d'état quantique, par un canal quantique respectif, formé en intégrant l'AWG NxN, vers chacun de ces nœuds de réseau (N₁ ... Nₙ).

11. Réseau de transport optique OTN selon la revendication 10, **caractérisé en ce qu'**il comprend plusieurs nœuds de réseau (N₁ ... Nₙ) faisant fonction d'Alice, c'est-à-dire émettant des photons d'état quantique pour la génération de clés QKD, et un système de contrôle avec un superviseur qui est conçu pour commander, en fonction d'un besoin de clés signalé en continu au système de contrôle par les nœuds de réseau (N₁ ... Nₙ) de l'OTN, lesquels des nœuds de réseau (N₁ ... Nₙ) reliés entre eux par des canaux quantiques génèrent et échangent à quel moment ensemble des clés de sécurité quantique selon un procédé QKD.

12. Réseau de transport optique OTN selon la revendication 10 ou 11 avec N nœuds de réseau (N₁ ... Nₙ), **caractérisé en ce que** l'OTN est conçu, en vue de la transmission de photons d'état quantique pour la génération de clés de sécurité quantique, comme un réseau entièrement maillé, dans lequel au moins N-2 des N nœuds de réseau (N₁ ... Nₙ) de l'OTN sont conçus pour faire fonction aussi bien d'Alice que de Bob du point de vue cryptographique.

13. Réseau de transport optique OTN selon l'une des revendications 10 à 12, **caractérisé en ce que** le récepteur d'au moins un nœud de réseau (N₁ ... Nₙ) faisant fonction de Bob comprend un détecteur optique au moyen duquel il peut être ajusté, dans une plage de longueurs d'ondes qui lui est possible, à différentes longueurs d'onde de réception.
